# EUROPEAN PATENT APPLICATION

(11) **EP 4 769 133 A1**
(43) Date of publication of application: **01.07.2026**
(21) Application number: 24916732.1
(22) Date of filing: 24.12.2024
(51) Int. Cl.: G06F 9/451

(54) **INTERFACE ALWAYS ON DISPLAY METHOD, ELECTRONIC DEVICE, AND COMPUTER-READABLE STORAGE MEDIUM**

(30) Priority: 10.01.2024 CN 202410042446
(71) Applicant: Honor Device Co., Ltd., Shenzhen, Guangdong 518040 (CN)
(72) Inventor: LIU, Chao, Shenzhen, Guangdong 518040 (CN)
(74) Representative: MERH-IP Matias Erny Reichl Hoffmann Patentanwälte PartG mbB
(86) International application number: PCT/CN2024/141948
(87) International publication number: WO 2025/148685

(57) **Abstract**

This application relates to the field of terminal technologies, and provides an always-on screen display method, an electronic device, and a computer-readable storage medium. The method includes: receiving a first operation inputted by a user on a theme selection interface; selecting a first theme in response to the first operation, where the first theme corresponds to a first configuration file and a first resource package, the first configuration file includes at least a first configuration item, and the first configuration item indicates whether the first theme supports a full-screen AOD mode; receiving a second operation performed by the user in an unlocked state, where the second operation is a screen-off operation; playing a first screen-off animation in response to the second operation; and after the playing of the first screen-off animation is completed, entering the full-screen AOD mode in response to a current configuration value of the first configuration item being that the first theme supports the full-screen AOD mode. The foregoing method can improve user experience.

## Description

This application claims priority to Chinese Patent Application No. 202410042446.4, filed with the China National Intellectual Property Administration on January 10, 2024 and entitled "ALWAYS-ON SCREEN DISPLAY METHOD, ELECTRONIC DEVICE, AND COMPUTER-READABLE STORAGE MEDIUM", which is incorporated herein by reference in its entirety.

### TECHNICAL FIELD

This application relates to the field of terminal technologies, and specifically, to an always-on screen display method, an electronic device, and a computer-readable storage medium.

### BACKGROUND

With richer functions of terminal devices, people's requirements for experience of using the terminal devices become higher.

Display effects of the terminal devices in various scenarios also attract people's attention. For example, a user sets different home screens, lock screen wallpapers, and the like according to personal preferences.

In a conventional display mode, if a user presses a power button in a screen-on and unlocked state to perform a screen-off operation, a screen of a terminal device is directly turned off. If the user enables an AOD function, the terminal device switches to a local AOD mode after the screen is turned off, and a display effect is monotonous, resulting in low user experience.

### SUMMARY

This application provides an always-on screen display method and apparatus, a chip, an electronic device, a computer-readable storage medium, and a computer program product, to improve user experience.

According to a first aspect, an always-on screen display method is provided. The method is applied to an electronic device, and includes: receiving a first operation inputted by a user on a theme selection interface, where the first operation is used for selecting a first theme; selecting the first theme in response to the first operation, where the first theme corresponds to a first configuration file and a first resource package, the first configuration file includes at least a first configuration item, and the first configuration item indicates whether the first theme supports a full-screen AOD mode; receiving a second operation performed by the user in an unlocked state, where the second operation is a screen-off operation; playing a first screen-off animation in response to the second operation; and after the playing of the first screen-off animation is completed, entering the full-screen AOD mode in response to a current configuration value of the first configuration item being that the first theme supports the full-screen AOD mode, where the first screen-off animation is a resource in the first resource package, and a last frame of the first screen-off animation is associated with an always-on image displayed in the full-screen AOD mode. A proportion of first pixels in all pixels on a screen of the electronic device exceeds a first preset proportion in the full-screen AOD mode, and the first pixels are lighted pixels on the screen.

After the user uses the first theme, if the user performs the screen-off operation, a terminal device may play the screen-off animation and enter the full-screen AOD mode based on an indication of the current configuration value of the first configuration item. Because the last frame of the screen-off animation is associated with the always-on image displayed in the full-screen AOD mode, and content displayed by the last frame and the always-on image is the same or similar, there is no obvious screen jump in a process of entering the full-screen AOD mode after the playing of the screen-off animation is completed, and display effects are coherent, thereby improving user experience.

In some possible implementations, the playing a first screen-off animation includes: obtaining a first video file, where the first video file is a resource in the first resource package, and the first video file corresponds to the full-screen AOD mode and a current color mode of a current system; playing the first screen-off animation according to a third configuration item in response to a current configuration value of a second configuration item being supporting playing of the screen-off animation, where the second configuration item and the third configuration item are configuration items in the first configuration file, the second configuration item indicates whether the playing of the screen-off animation is supported, and the third configuration item indicates whether frame extraction is supported when the screen-off animation is played; and performing frame extraction on the first video file according to a preset frame extraction multiple when a current configuration value of the third configuration item is supporting the frame extraction when the first screen-off animation is played, to obtain a first frame extraction sequence, where a sorting order of a plurality of video frames in the first frame extraction sequence is the same as a sorting order of the plurality of video frames in the first video file; and playing the first frame extraction sequence in reverse, to play the first screen-off animation; or playing video frames in the first video file frame by frame in reverse when a current configuration value of the third configuration item is not supporting the frame extraction when the first screen-off animation is played, to play the first screen-off animation.

A playing mode and speed of the screen-off animation can be flexibly configured by using the second configuration item and the third configuration item, and usage scenarios are richer.

In some possible implementations, the method further includes: receiving, in the full-screen AOD mode, a third operation inputted by the user, where the third operation is used for waking up the screen of the electronic device; entering, by the electronic device, a screen-on state in response to the first operation, and playing a first lock screen animation according to a fourth configuration item, where the fourth configuration item indicates a total quantity of frames of the first lock screen animation, the first lock screen animation is a first video interval from a first frame to a second frame in the first video file, the first frame is the 1^{st} frame of the first video file, and a quantity of frames of the first video interval is the total quantity of frames of the first lock screen animation; entering a first screen-on and locked state after the playing of the first lock screen animation is completed; and displaying a first lock screen in the first screen-on and locked state, where a background image of the first lock screen is a last frame of the first lock screen animation.

The electronic device displays the first lock screen in the first screen-on and locked state. The background image of the first lock screen is the last frame of the first lock screen animation, so that coherent animations are displayed without a screen jump in a process of entering the lock screen from the full-screen AOD state, thereby improving user experience.

In some possible implementations, when the first theme supports a depth-of-field effect, and after the selecting the first theme in response to the first operation, the method includes: obtaining a first lock screen image from the first resource package, where the first lock screen image is a resource in the first resource package, and the first lock screen image and the second frame include same display content; and the step of displaying a first lock screen in the first screen-on and locked state includes: displaying the first lock screen in the first screen-on and locked state; and displaying the first lock screen image above a layer of the first lock screen.

If the first theme supports the depth-of-field effect, a layer of the first lock screen image may be generated above the layer of the lock screen, and is used for displaying the first lock screen image above the layer of the first lock screen. When another operation is received, the layer of the first lock screen is destroyed, and the first lock screen is displayed. Content displayed by the first lock screen image is the same as the last frame (namely, the second frame) of the first lock screen animation, so that the depth-of-field effect can be displayed, and the coherent animations are displayed without the screen jump in the process of entering the lock screen from the full-screen AOD state, thereby improving user experience.

In some possible implementations, the method further includes: receiving, in the first screen-on and locked state, a fourth operation inputted by the user, where the fourth operation is used for unlocking the screen of the electronic device; playing a first home screen animation according to the fourth configuration item and a fifth configuration item in response to the fourth operation, where the fifth configuration item indicates a total quantity of frames of the first home screen animation, the first home screen animation is a second video interval from a third frame to a fourth frame in the first video file, the third frame is a next frame of the second frame, and a quantity of frames of the second video interval is the total quantity of frames of the first home screen animation; and displaying a first home screen after the playing of the first home screen animation is completed, where a background image of the first home screen is the fourth frame.

If the user receives, when the first lock screen is displayed, the fourth operation of unlocking the electronic device by the user, the first home screen animation may be played to enter the home screen. Specifically, the electronic device may play the second video interval between a next frame of the third frame indicated by the fourth configuration item and the fourth frame indicated by the fifth configuration item, to play the first home screen animation. Because the background image of the first home screen is the fourth frame, a display effect of entering the home screen from the lock screen is coherent without the screen jump, thereby improving user experience.

In some possible implementations, the method further includes: receiving, in the full-screen AOD mode, a fifth operation inputted by the user, where the fifth operation is used for unlocking the screen of the electronic device; entering, by the electronic device, a screen-on and unlocked state in response to the fifth operation, and playing the first video file according to a fourth configuration item and a fifth configuration item, where the fourth configuration item and the fifth configuration item are configuration items in the first configuration file, the first video file includes a first lock screen animation and a first home screen animation, the fourth configuration item indicates a total quantity of frames of the first lock screen animation, the fourth configuration item indicates the total quantity of frames of the first lock screen animation, the first lock screen animation is a first video interval from a first frame to a second frame in the first video file, the first frame is the 1^{st} frame of the first video file, a quantity of frames of the first video interval is the total quantity of frames of the first lock screen animation, the fifth configuration item indicates a total quantity of frames of the first home screen animation, the first home screen animation is a second video interval from a third frame to a fourth frame in the first video file, the third frame is a next frame of the second frame, and a quantity of frames of the second video interval is the total quantity of frames of the first home screen animation; and displaying a first home screen after the playing of the first video file is completed, where a background image of the first home screen is the fourth frame.

If the user directly performs, in the full-screen AOD mode, the fifth operation of unlocking the screen, for example, touches a fingerprint halo displayed in the AOD mode to enter a fingerprint for unlocking, the terminal device may continuously play the first lock screen animation and the first home screen animation to enter the home screen. A display effect in this process is coherent. Because the background image of the first home screen is the fourth frame, a display effect of entering the home screen from the lock screen is coherent. In addition, because the background image of the first home screen is the fourth frame, a display effect of entering the home screen from the lock screen is coherent without a screen jump, thereby improving user experience.

In some possible implementations, the method further includes: receiving a sixth operation inputted by the user, where the sixth operation is an AOD state switching operation; switching from the full-screen AOD mode to a local AOD mode in response to the sixth operation; receiving a seventh operation performed by the user in a screen-on and unlocked state, where the seventh operation is a screen-off operation; playing a second screen-off animation in response to the seventh operation; and entering the local AOD mode after the playing of the second screen-off animation is completed, where the second screen-off animation is a resource in the first resource package, and a last frame of the second screen-off animation is associated with an always-on image displayed in the local AOD mode. A proportion of first pixels in all the pixels on the screen of the electronic device is less than a second preset proportion in the local AOD mode, and the second preset proportion is less than the first preset proportion.

When the user performs the sixth operation of switching an AOD state on an AOD state setting interface, the terminal device switches from the full-screen AOD mode to the local AOD mode in response to the sixth operation. If the user performs the seventh operation to turn off the screen, the terminal device may play the second screen-off animation corresponding to the local AOD mode.

It should be noted that, the last frame of the second screen-off animation is associated with the always-on image displayed in the local AOD mode, that is, content displayed by the last frame and the always-on image is the same or similar. The user does not perceive an obvious screen jump in a process of switching from the last frame of the second screen-off animation to the local AOD mode, thereby improving user experience. The method supports switching between different AOD states, is highly flexible, and can adapt to different requirements of the user.

In some possible implementations, the playing a second screen-off animation includes: obtaining a second video file, where the second video file is a video file in the first resource package, and the second video file corresponds to the local AOD mode and a current color mode; determining a first to-be-played interval from the second video file according to a sixth configuration item, a seventh configuration item, an eighth configuration item, a ninth configuration item, a tenth configuration item, and an eleventh configuration item, where a sorting order of a plurality of video frames in the first to-be-played interval is the same as a sorting order of the plurality of video frames in the second video file, the first to-be-played interval includes a target local lock screen animation and a second home screen animation, the sixth configuration item indicates a quantity of a plurality of segments of local lock screen animations in the second video file, the plurality of segments of local lock screen animations correspond to a plurality of display locations of the always-on image in the local AOD mode, the seventh configuration item indicates the target local lock screen animation corresponding to the second screen-off animation, the target local lock screen animation is one of the plurality of segments of local lock screen animations, the eighth configuration item indicates a total quantity of frames of the plurality of segments of local lock screen animations, the ninth configuration item indicates a total quantity of frames of a first segment of local lock screen animation in the plurality of segments of local lock screen animations, the tenth configuration item indicates a total quantity of frames of a second segment of local lock screen animation in the plurality of segments of local lock screen animations, the eleventh configuration item indicates a total quantity of frames of the second home screen animation in the second video file, and the sixth configuration item, the seventh configuration item, the eighth configuration item, the ninth configuration item, the tenth configuration item, and the eleventh configuration item are configuration items in the first configuration file, where the first segment of local lock screen animation is a third video interval from a fifth frame to a sixth frame in the second video file, the fifth frame is the 1^{st} frame of the second video file, and a quantity of frames of the third video interval is the total quantity of frames of the first segment of local lock screen animation; the second segment of local lock screen animation is a fourth video interval from a seventh frame to an eighth frame in the second video file, the seventh frame is a next frame of the sixth frame, and a quantity of frames of the fourth video interval is the total quantity of frames of the second segment of local lock screen animation; the plurality of segments of local lock screen animations are a fifth video interval from the fifth frame to a ninth frame in the second video file, the fifth video interval includes the third video interval and the fourth video interval, and a quantity of frames of the fifth video interval is the total quantity of frames of the plurality of segments of local lock screen animations; and the second home screen animation is a sixth video interval from a tenth frame to an eleventh frame in the second video file, the tenth frame is a next frame of the ninth frame, and a quantity of frames of the sixth video interval is the total quantity of frames of the second home screen animation; playing the second screen-off animation according to a third configuration item in response to a current configuration value of a second configuration item being supporting playing of the screen-off animation, where the third configuration item indicates whether frame extraction is supported when the second screen-off animation is played; and performing frame extraction on the first to-be-played interval according to a preset frame extraction multiple when a current configuration value of the third configuration item is supporting the frame extraction when the second screen-off animation is played, to obtain a second frame extraction sequence; and playing the second frame extraction sequence in reverse, to play the second screen-off animation; or playing the first to-be-played interval frame by frame in reverse in response to a current configuration value of the third configuration item being not supporting the frame extraction when the screen-off animation is played, to play the second screen-off animation, where a last frame of the second screen-off animation is associated with the always-on image displayed in the local AOD mode.

A playing region, mode, and speed of the screen-off animation can be flexibly configured by using the foregoing configuration items, and usage scenarios are richer. Because the last frame of the second screen-off animation is associated with the always-on image displayed in the local AOD mode, there is no obvious screen jump, thereby improving user experience.

In some possible implementations, the method further includes: receiving, in the local AOD mode, an eighth operation inputted by the user, where the eighth operation is used for waking up the screen of the electronic device; entering, by the electronic device, a screen-on state in response to the eighth operation, and playing a second lock screen animation according to the ninth configuration item, the tenth configuration item, the eleventh configuration item, and a current display location of the always-on image in the local AOD mode, where the second lock screen animation is one of the plurality of segments of local lock screen animations, and the 1^{st} frame in the second lock screen animation is associated with the current display location; entering a second screen-on and locked state after the playing of the second lock screen animation is completed; and displaying a second lock screen in the second screen-on and locked state, where a background image of the second lock screen is a last frame of the second lock screen animation.

In the local AOD mode, if the user enters a fingerprint in a fingerprint halo on an always-on screen, the terminal device may determine, from the plurality of segments of local lock screen animations according to the ninth configuration item, the tenth configuration item, the eleventh configuration item, and the current display location of the always-on image in the local AOD mode, a segment of animation whose start location is closest to the current display location, and play the segment of animation as the second lock screen animation. Because the background image of the second lock screen is the last frame of the second lock screen animation, there is no obvious screen jump in an unlocking process, thereby improving user experience.

In some possible implementations, the method further includes: receiving, in the second screen-on and locked state, an eighth operation inputted by the user, where the eighth operation is used for unlocking the screen of the electronic device; playing the second home screen animation according to the eighth configuration item and the eleventh configuration item in response to the eighth operation; and displaying a second home screen after the playing of the second home screen animation is completed, where a background image of the second home screen is the eleventh frame.

If the terminal device receives, in the second screen-on and locked state, the unlocking operation inputted by the user, for example, an operation of inputting a fingerprint for unlocking, the electronic device may play the second home screen animation indicated by the eighth configuration item and the eleventh configuration item, and enter the second home screen. Because the background image of the second home screen is the last frame of the second video file, a display effect is coherent.

In some possible implementations, the method further includes: receiving, in the local AOD mode, a ninth operation inputted by the user, where the ninth operation is used for unlocking the screen of the electronic device; entering, by the electronic device, a screen-on state in response to the ninth operation, and sequentially playing a second lock screen animation and a second home screen animation according to a ninth configuration item, a tenth configuration item, an eleventh configuration item, and a current display location of the always-on image in the local AOD mode, where the second lock screen animation is one of a plurality of segments of local lock screen animations in a second video file, the second video file is a resource in the first resource package, the plurality of segments of local lock screen animations correspond to a plurality of display locations of the always-on image in the local AOD mode, the 1^{st} frame in the second lock screen animation is associated with the current display location, the ninth configuration item indicates a total quantity of frames of a first segment of local lock screen animation in the plurality of segments of local lock screen animations, the tenth configuration item indicates a total quantity of frames of a second segment of local lock screen animation in the plurality of segments of local lock screen animations, the eleventh configuration item indicates a total quantity of frames of the second home screen animation in the second video file, and the ninth configuration item, the tenth configuration item, and the eleventh configuration item are configuration items in the first configuration file; and displaying a second home screen after the playing of the second home screen animation is completed, where a background image of the second home screen is a last frame of the second home screen animation.

If the user directly performs the ninth operation in the local AOD mode to unlock the screen, for example, enters a fingerprint in the AOD mode, the terminal device determines, according to the current display location of the always-on image in the local AOD mode, a local lock screen animation closest to a start location of the current display location, and then sequentially plays the local lock screen animation and the second home screen animation to enter the second home screen. Therefore, a display effect of entering the home screen from the AOD state is coherent, and no screen jump occurs, thereby improving user experience.

According to a second aspect, an always-on screen display apparatus is provided, including a unit including software and/or hardware, where the unit is configured to perform any method in the technical solutions of the first aspect.

According to a third aspect, an embodiment of this application provides a chip, including a processor. The processor is configured to read and execute a computer program stored in a memory, to perform any method in the technical solutions of the first aspect.

Optionally, the chip further includes the memory, and the memory is connected to the processor through a circuit or a wire.

Further, optionally, the chip further includes a communication interface.

According to a fourth aspect, an electronic device is provided. The electronic device includes a processor, a memory, and an interface, where the processor, the memory, and the interface cooperate with each other, to cause the electronic device to perform any method in the technical solutions of the first aspect; or includes the any chip according to the third aspect.

According to a fifth aspect, a computer-readable storage medium is provided. The computer-readable storage medium stores a computer program, and the computer program, when executed by a processor, causes the processor to perform any method in the technical solutions of the first aspect.

According to a sixth aspect, a computer program product is provided. The computer program product includes computer program code. When the computer program code is run on an electronic device, the electronic device is caused to perform any method in the technical solutions of the first aspect.

### BRIEF DESCRIPTION OF DRAWINGS

FIG. 1 is a schematic structural diagram of a terminal device 100 according to an embodiment of this application;
FIG. 2 is a schematic diagram of an always-on screen in a local AOD mode according to an embodiment of this application;
FIG. 3 is a schematic diagram of an always-on screen in a full-screen AOD mode according to an embodiment of this application;
FIG. 4 is a schematic diagram of a switch interface for an AOD state according to an embodiment of this application;
FIG. 5 is a schematic diagram of a lock screen animation in a full-screen AOD mode according to an embodiment of this application;
FIG. 6 is another schematic diagram of a lock screen animation in a full-screen AOD mode according to an embodiment of this application;
FIG. 7 is a block diagram of a software structure of a terminal device 100 according to an embodiment of this application;
FIG. 8A and FIG. 8B are an interaction diagram of an always-on screen display method according to an embodiment of this application;
FIG. 9 is a flowchart of an always-on screen display method according to an embodiment of this application;
FIG. 10 is a flowchart of another always-on screen display method according to an embodiment of this application; and
FIG. 11 is a schematic structural diagram of an always-on screen display apparatus according to an embodiment of this application.

### DESCRIPTION OF EMBODIMENTS

The following describes technical solutions in embodiments of this application with reference to the accompanying drawings in the embodiments of this application. In the descriptions of the embodiments of this application, unless otherwise specified, "/" represents "or". For example, A/B may represent A or B. In this specification, "and/or" is merely an association relationship for describing associated objects, and represents that three relationships may exist. For example, A and/or B may represent the following three cases: Only A exists, both A and B exist, and only B exists. In addition, in the descriptions of the embodiments of this application, "a plurality of" means two or more.

The terms "first", "second", and "third" mentioned below are merely intended for description, and shall not be understood as an indication or implication of relative importance or implicit indication of a quantity of indicated technical features. Therefore, a feature limited by "first", "second", or "third" may explicitly or implicitly include one or more of the features.

An always-on screen display method provided in the embodiments of this application may be applied to a terminal device, for example, a mobile phone, a tablet computer, a wearable device, an in-vehicle device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in the embodiments of this application.

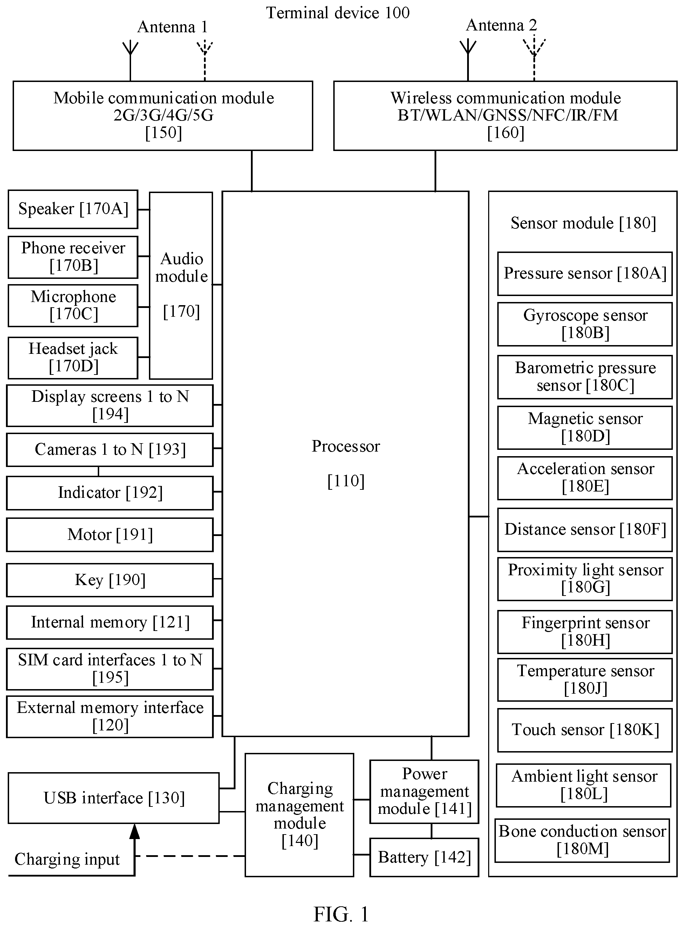

For example, FIG. 1 is a schematic structural diagram of a terminal device 100 according to an embodiment of this application. The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, a proximity light sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of this application does not constitute a specific limitation on the terminal device 100. In some other embodiments of this application, the terminal device 100 may include more or fewer components than those shown in the figure, some components may be combined, some components may be split, or different component arrangement may be used. The components shown in the figure may be implemented by hardware, software, or a combination of software and hardware.

It may be understood that an interface connection relationship between the modules illustrated in this embodiment of this application is merely an example for description, and does not constitute a limitation on the structure of the terminal device 100. In some other embodiments of this application, the terminal device 100 may alternatively use an interface connection mode different from that in the foregoing embodiment, or use a combination of a plurality of interface connection modes.

With richer functions of terminal devices, people's requirements for experience of using the terminal devices become higher. Display effects of the terminal devices in various scenarios also attract people's attention. For example, a user sets different home screens, lock screen wallpapers, and the like according to personal preferences. If the user performs a screen-on operation in an AOD state, a screen of the terminal device is directly switched from the AOD state to a screen-locked state, and a display effect is monotonous.

The always-on screen display method provided in the embodiments of this application is applied to enrich a display effect for a display solution for a terminal device to entering a screen-on state from an always-on state, thereby improving user experience.

To clearly describe a detailed process of entering the screen-on state from the always-on state, an always-on display function for controlling the always-on state is first described.

After the terminal device enables the always-on display function, the terminal device may enter the always-on state when the user does not use the terminal device.

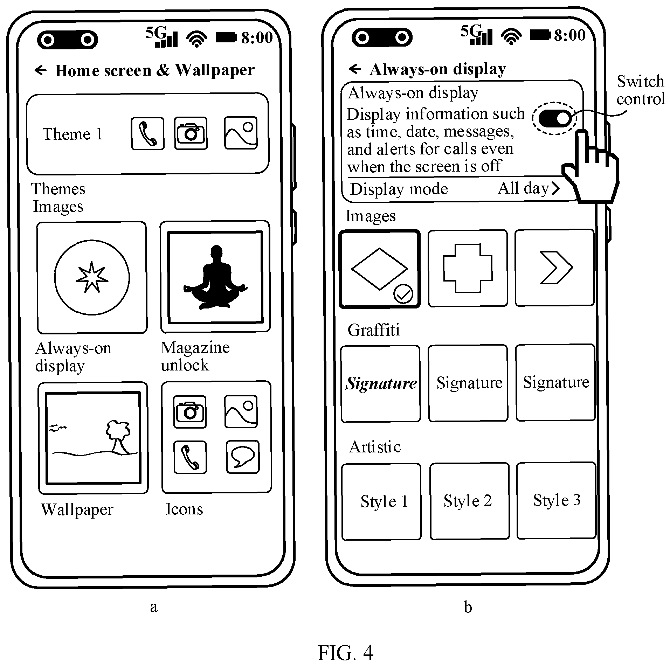

A manner of enabling/disabling the always-on display function is: The user may tap: Settings > Home screen & Wallpaper on a home screen, and the terminal device displays an interface shown in a in FIG. 4. The user taps a card of always-on display in a in FIG. 4, to enter an always-on display setting interface shown in b in FIG. 4. The always-on display setting interface includes a switch control for always-on display. The user may tap, on the always-on display setting interface, the switch control for always-on display to enable or disable the always-on display function. Optionally, the user may further select, from a menu of Display mode on the always-on display setting interface, any one of display modes: All day, Tap to show, and Scheduled. b in FIG. 4 is shown by using an example in which the display mode of All day is selected.

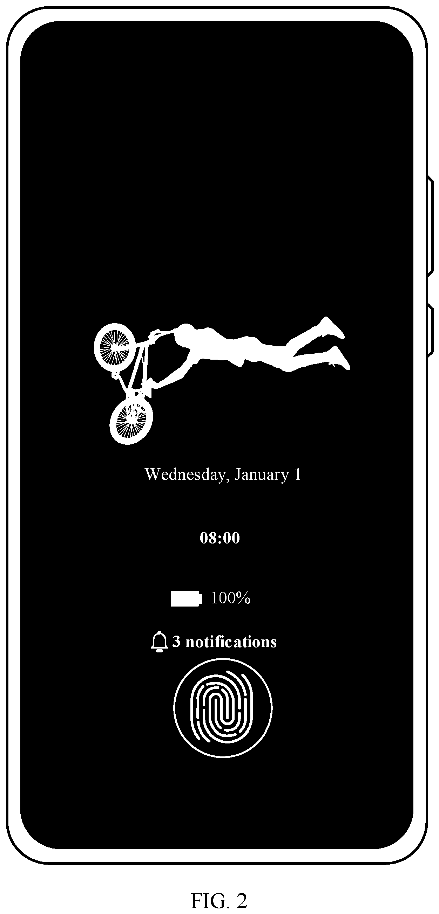

The always-on state may be embodied as a display state of a screen of the terminal device, and may also be referred to as an always-on display (always-on display, AOD) mode or an AOD state. An interface displayed on the screen in the AOD state is referred to as an always-on screen, and an image displayed on the always-on screen is referred to as an always-on image. In the AOD state, the screen of the terminal device is not in a screen-off state, but continuously displays some useful information, for example, continuously displays time, a date, and an electric quantity, and may further display the always-on image and a fingerprint halo, as shown in FIG. 2. The always-on image in FIG. 2 includes a person and a bicycle. In the AOD state, the user can obtain important information such as the time, the date, a notification, and the electric quantity without waking up a mobile phone. Compared with frequently waking up a screen of the mobile phone to check information, the AOD function can greatly reduce a quantity of wakeup times, thereby reducing battery consumption. Optionally, information displayed in the AOD state may further be added or deleted based on a user setting.

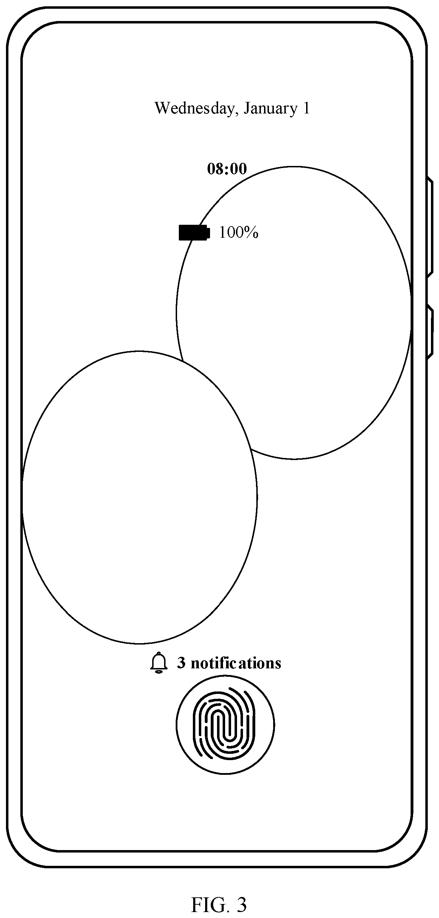

The AOD state may be classified into two modes based on different display modes. One mode is a local AOD mode. In the local AOD mode, the always-on image does not occupy the entire screen, but occupies only a small region of the screen, and a remaining area other than the always-on image and the information such as the time, the date, the notification, and the electric quantity is in a black screen state. The other mode is a full-screen AOD mode. In the full-screen AOD mode, the always-on image occupies a large part of the screen (for example, the always-on image occupies 95% of the area of the screen), and information such as time, a date, and an electric quantity is displayed at an upper layer of the always-on image. In the full-screen AOD mode, there is no large black screen region on the screen, for example, as shown in FIG. 3. The always-on image in FIG. 3 includes balloons and a background.

To distinguish between the full-screen AOD mode and the local AOD mode, descriptions are provided by using distribution of pixel values of pixels on the screen. A pixel value of a pixel displayed in black on the screen is 0 or close to 0 (for example, less than 10). A larger pixel value indicates higher brightness. In this case, in the local AOD mode, a small region on the screen is used for displaying the always-on image and the information such as the time, and the small region is referred to as a display region. In the local AOD mode, pixel values of all pixels or most pixels in the display region are large (brightness is high), for example, greater than 100. Pixel values of pixels in most of a region other than the display region (regions other than the always-on image and the information such as the time, the date, the notification, and the electric quantity) on the screen are 0 or close to 0.

In the full-screen AOD mode, most or all of the area on the screen is used for displaying the always-on image, and pixel values of all pixels or most pixels in the always-on image are large, for example, greater than 100. Therefore, in the full-screen AOD mode, a proportion of pixels whose pixel values are greater than a preset pixel value threshold (for example, 100) (pixels with high brightness) on the screen is large on the entire screen, for example, is greater than a preset proportion. Optionally, the preset proportion may be any proportion between 90% and 100%. The preset pixel value threshold may be a number, for example, 100 or 200, far from 0.

Regardless of the full-screen AOD mode or the local AOD mode, the AOD state may further include three modes based on different display occasions. One mode is a tap-to-show mode, that is, entering the AOD state through tapping. In the tap-to-show mode, if the user does not use the terminal device all the time, the terminal device enters the screen-off state. After entering the screen-off state, the terminal device does not display any interface. In the screen-off state, when the user taps the screen, the terminal device enters the AOD state, and the terminal device may display a corresponding always-on screen. Another mode is an all-day mode, that is, when the terminal device is not used, the terminal device is in the AOD state all day, and the terminal device does not automatically turn off the screen. In the all-day mode, when the user presses a power button or does not use the terminal device for a long time, the terminal device enters the AOD state, and continuously displays the always-on screen. A remaining mode is a scheduled mode, that is, when the terminal device is not used, the terminal device does not automatically turn off the screen within a specified timing period (for example, between 7: 00 and 23: 00), but continuously displays the always-on screen. However, in other periods than the specified timing period, the terminal device enters the screen-off state when not being used, and no longer displays any interface. In the scheduled mode, the user may set different timing periods according to requirements. Optionally, the AOD state may further include a mode that is based on another display occasion. This is not limited in the embodiments of this application.

The foregoing AOD state is descriptions for a display state of the screen. In the AOD state, the entire terminal device may further enter a doze (Doze) mode. In the doze mode, system applications of the terminal device reduce access to a network and occupation of a CPU, a frequency of the CPU is reduced, a frame rate of the always-on screen is reduced, and brightness of the screen is reduced, thereby saving a battery level.

After the doze mode lasts for a period of time, the terminal device may further enter a deeper sleep mode, namely, a doze sleep mode, which may be referred to as a doze suspend mode. If the AOD state is in the all-day mode, in the doze suspend mode, the frequency of the CPU is further reduced; the frame rate of the always-on screen is further reduced, for example, is one frame per second; and the brightness of the screen is further reduced. Therefore, the battery level is further saved.

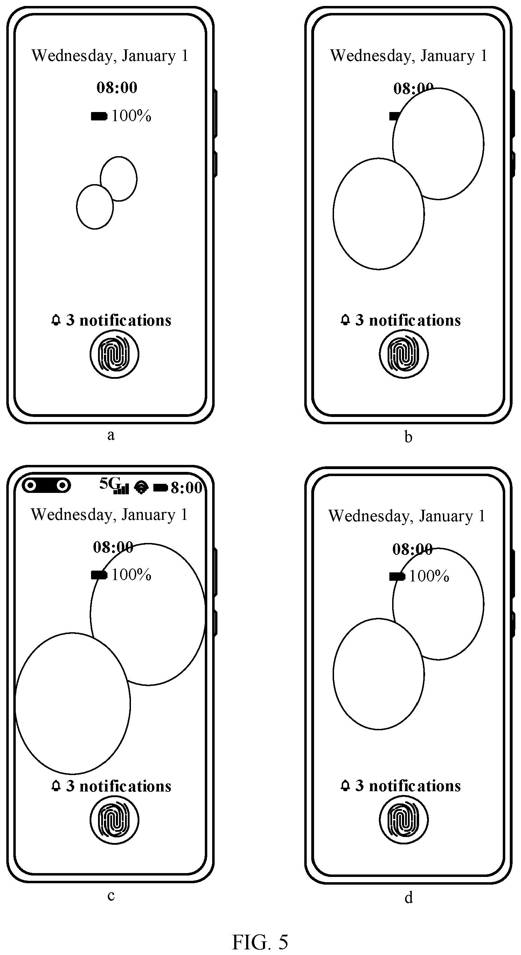

In the AOD state, when the user presses the power button, the screen may enter a screen-locked state from the always-on screen, and a lock screen is displayed in the screen-locked state. If the user sets a lock screen animation, in a process in which the terminal device enters the screen-locked state from the AOD state, a segment of animation is played on the always-on screen to switch to the screen-locked state. This segment of animation is referred to as the lock screen animation. A display effect of the lock screen animation includes two modes. One mode is a depth-of-field effect. If the user sets the depth-of-field effect for the lock screen animation, in a process in which the terminal device plays the lock screen animation, a layer of a foreground animation in the lock screen animation covers a time layer, and is an uppermost layer. FIG. 5 shows a process of playing the lock screen animation. When the terminal device displays an always-on screen shown in a in FIG. 5, the user presses the power button to trigger the playing of the lock screen animation. In the process of playing the lock screen animation, the foreground animation (two overlapping circles) is gradually enlarged to be displayed from a location shown in a in FIG. 5, and may be displayed as shown in b in FIG. 5 in the middle. Then, the playing continues to enter the screen-locked state, to display a lock screen shown in c in FIG. 5. b in FIG. 5 is a schematic diagram of a screen in the process of playing the lock screen animation when the depth-of-field effect exists. It can be learned from b in FIG. 5 that the lock screen animation (namely, the layer of the foreground animation) covers the time layer. The other mode is a non-depth-of-field effect. If the user does not set a depth-of-field effect for the lock screen animation, in a process in which the terminal device plays the lock screen animation, the lock screen animation is always played at a lower layer of a time layer in the screen-locked state, and the time layer in the screen-locked state is always displayed at an upper layer of the lock screen animation. For the process of playing the lock screen animation with the non-depth-of-field effect, refer to FIG. 5. When the terminal device displays an always-on screen shown in a in FIG. 5, the user presses the power button to trigger the playing of the lock screen animation. In the process of playing the lock screen animation, two overlapping circles in the lock screen animation are gradually enlarged to be displayed from a location shown in a in FIG. 5, and may be displayed as shown in d in FIG. 5 in the middle. Then, the playing continues to enter the screen-locked state, to display a lock screen shown in c in FIG. 5. It can be learned from d in FIG. 5 that, the lock screen animation does not cover the time layer, and is always displayed at a lower layer of the time layer. It should be noted that, regardless of whether the user sets the depth-of-field effect, the terminal device may display the lock screen after the playing of the lock screen animation is completed. The layer of the foreground animation does not exist on the lock screen, and the time is always displayed at the upper layer and is not covered.

Under the depth-of-field effect, the foreground animation may cover the time layer for display. In addition, optionally, the foreground animation may cover another displayed object on the screen, for example, cover icons such as the notification and the electric quantity. Optionally, under the depth-of-field effect, different objects in the animation may alternatively be played at different layers. A part of objects are located at a lower layer of the time layer, and the other part of objects are at an upper layer of the time layer, thereby improving a display effect. A specific playing form of the depth-of-field effect is not limited in this application.

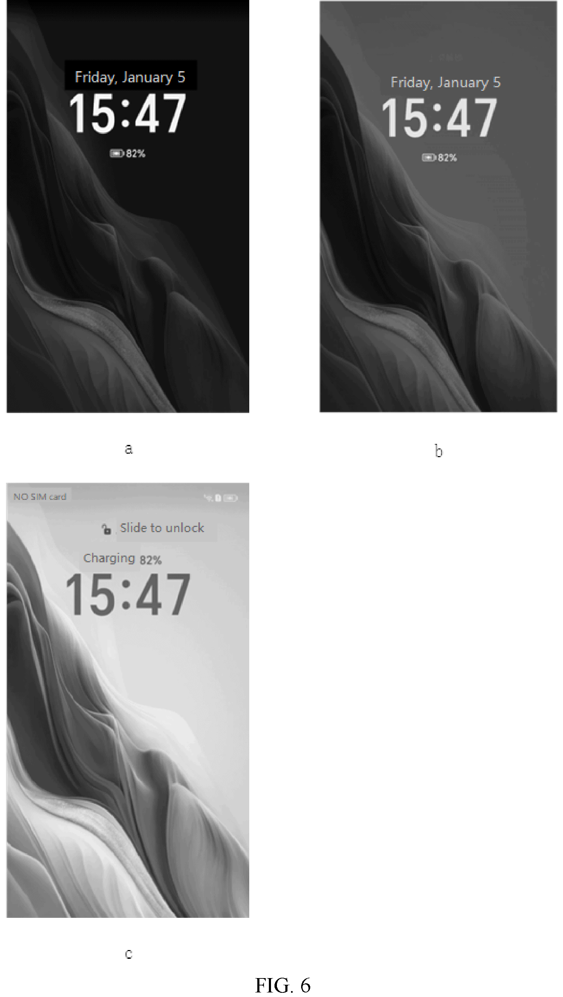

FIG. 6 is another diagram of a screen change in a process of playing a lock screen animation. Both FIG. 6 and FIG. 5 use an example in which the screen-locked state is entered in the full-screen AOD mode. In the full-screen AOD mode shown in a in FIG. 6, the user taps the power button to trigger the playing of the lock screen animation. A screen shown in b in FIG. 6 may be displayed in the process of playing the lock screen animation. It can be learned that brightness of the screen in b in FIG. 6 is higher. The terminal device continues to play the lock screen animation to enter the lock screen state, and displays a lock screen shown in c in FIG. 6. Brightness of the lock screen shown in c in FIG. 6 is higher than that of the screen shown in b in FIG. 6. That is, in the process of playing the lock screen animation shown in FIG. 6, the screen gradually becomes bright. A proportion in the screen diagram shown in FIG. 6 is an example, and is not intended to limit a proportion displayed on an actual screen. Optionally, the screen shown in FIG. 6 may further include icons such as a fingerprint halo (not shown in the figure). This is not limited in this embodiment of this application.

To improve the display effect of entering the screen-on state from the AOD state, the embodiments of this application provide an always-on screen display method. A plurality of configuration items are set to control a screen display form from the AOD state to the screen-on state, so that an animation display process is coherent, thereby improving the display effect.

The following describes a software architecture on which the embodiments of this application rely.

A software system of the terminal device 100 may adopt a layered architecture, an event-driven architecture, a micro-kernel architecture, a micro-service architecture, or a cloud architecture. An Android system in the layered architecture is used as an example in the embodiments of this application to describe the software structure of the terminal device 100.

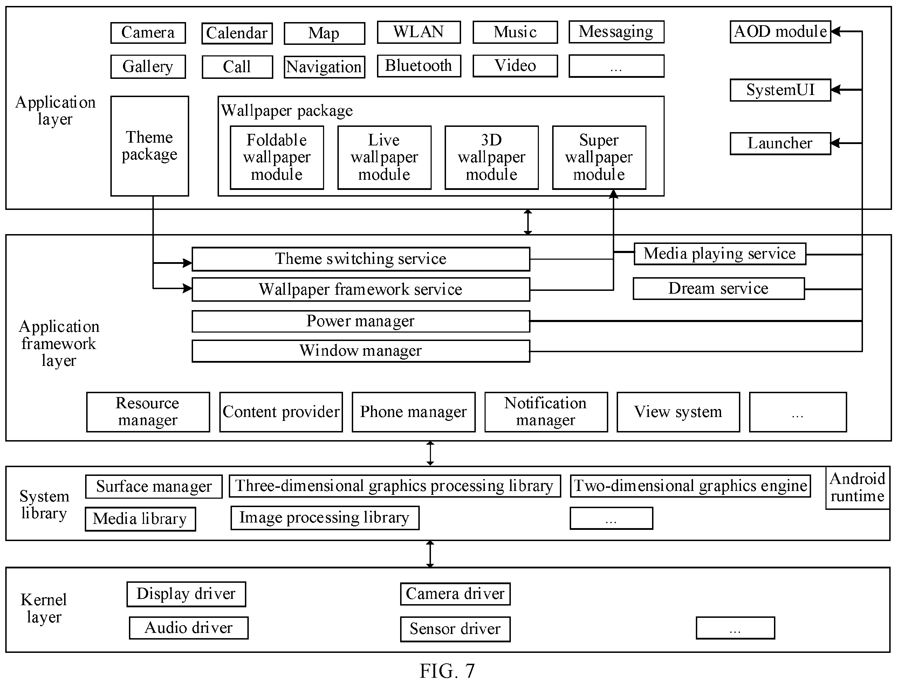

FIG. 7 is a block diagram of the software structure of the terminal device 100 according to an embodiment of this application. In the layered architecture, software is divided into several layers, and each layer has a clear role and task. The layers communicate with each other through a software interface. In some embodiments, the Android system is divided into four layers, namely, an application layer, an application framework layer, an Android runtime (Android runtime) and system library, and a kernel layer from top to bottom. The application layer may include a series of application packages.

Refer to FIG. 7. The application packages may include camera, gallery, calendar, phone, maps, navigation, WLAN, Bluetooth, music, videos, messaging, and the like.

The application packages further include: a theme package (a theme module), a wallpaper package (a wallpaper APK), an AOD module, a system user interface module (SystemUI), and a launcher (launcher).

The theme package is used for managing setting, presentation, and preview of different themes.

The wallpaper package includes wallpaper modules supporting a plurality of different wallpaper forms, for example, a foldable wallpaper module, a live wallpaper module, a 3D wallpaper module, and a super wallpaper module (a super wallpaper service). Different wallpaper modules are configured to achieve different wallpaper display effects.

The AOD module is configured to implement related display of the foregoing local AOD mode, and is also referred to as a local AOD module.

SystemUI can control an animation display mode from an AOD state to a screen-locked state in the full-screen AOD mode.

The application framework layer provides an application programming interface (application programming interface, API) and a programming framework for the applications at the application layer. The application framework layer includes some predefined functions.

As shown in FIG. 7, the application framework layer may include a window manager (WindowManagerService), a content provider, a view system, a phone manager, a resource manager, a notification manager, a theme switching service (Themanager), a wallpaper management service (WallpaperManagerSevice, or referred to as a wallpaper framework service), a dream service (DreamService), a power management service (Power ManagerService), and the like.

The window manager is configured to manage a window program, including managing a level and a display ranking of a window. The window manager may obtain a size of a display screen, determine whether there is a status bar, lock the screen, capture the screen, and so on.

The content provider is configured to store and acquire data, and enable the data to be accessed by an application. The data may include a video, an image, audio, calls that are made and answered, a browsing history and a bookmark, an address book, and the like.

The view system includes visual controls such as a control for displaying a text and a control for displaying an image. The view system may be configured to construct an application. A display interface may include one or more views. For example, a display interface including an SMS message notification icon may include a view for displaying a text and a view for displaying an image.

The phone manager is configured to provide a communication function of the terminal device 100, for example, call status management (including connecting, hanging-up, and the like).

The resource manager provides various resources such as a localized character string, an icon, an image, a layout file, and a video file for an application.

The notification manager enables an application to display notification information in a status bar, and may be configured to convey a notification-type message. The notification-type message may automatically disappear after a short pause without requiring user interaction.

The theme package and the super wallpaper module implement, under support of the theme switching service and a super wallpaper management service at the application framework layer, switching of a theme mode of the terminal device and displaying of a theme of a super wallpaper corresponding to the theme mode.

The power management service is used for managing a screen-on state of the terminal device, a screen-off state of the terminal device, and whether the screen of the terminal device is unlocked.

The dream service is used for managing a screen-on display state, a screen-off display state, and a display state in a doze mode of the terminal device.

The Android runtime includes a kernel library and a virtual machine. The Android runtime is responsible for scheduling and managing the Android system.

The kernel library includes two parts: a function that needs to be invoked in Java language and a kernel library of Android.

The application layer and the application framework layer are run in the virtual machine. The virtual machine executes Java files of the application layer and the application framework layer as binary files. The virtual machine is configured to perform object life cycle management, stack management, thread management, security and exception management, garbage collection, and the like.

The system library may include a plurality of functional modules, for example, a surface manager (surface manager), media libraries (media libraries), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports playing and recording for a plurality of common audio and video formats, static image files, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, synthesis, layer processing, and the like.

The 2D graphics engine is a drawing engine for 2D drawing.

The kernel layer is a layer between hardware and software. The kernel layer includes at least a display driver, a camera driver, an audio driver, and a sensor driver.

For ease of understanding, in the following embodiments of this application, the always-on screen display method provided in the embodiments of this application is specifically described with reference to the accompanying drawings and application scenarios by using a terminal device in the structures shown in FIG. 1 and FIG. 7 as an example.

A user may set a theme package to select a wallpaper theme that needs to be used. For example, the user taps a theme card in a in FIG. 4, to enter a theme selection interface to select the needed wallpaper theme. a in FIG. 4 is shown by using an example in which the user selects and uses a theme 1 as the wallpaper theme.

After the user selects and uses the needed wallpaper theme, if a terminal device enters an AOD state or a screen-off state and then enters a screen-on state, the terminal device may display a corresponding animation effect according to the selected wallpaper theme.

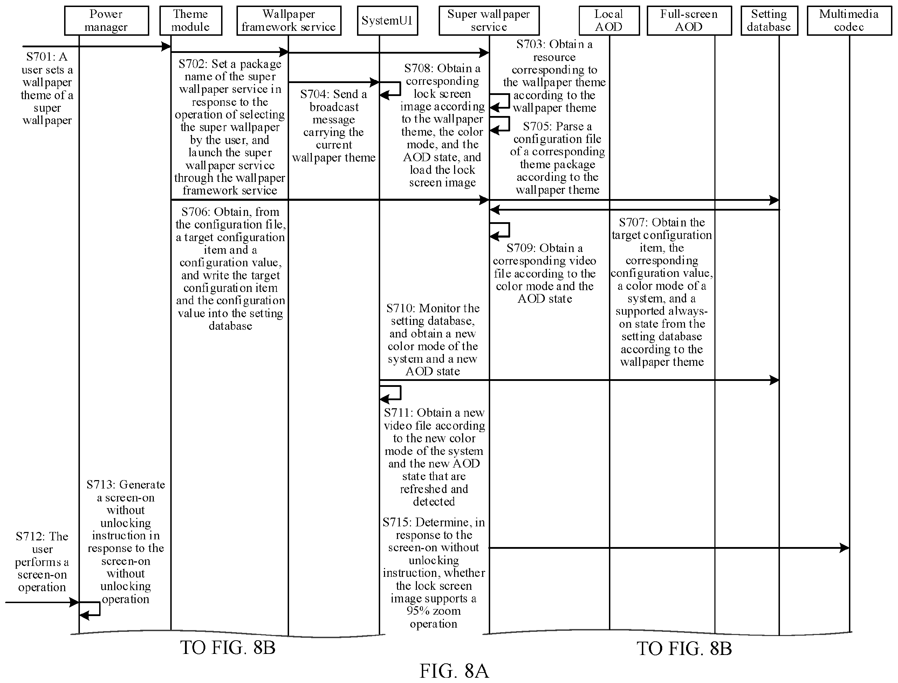

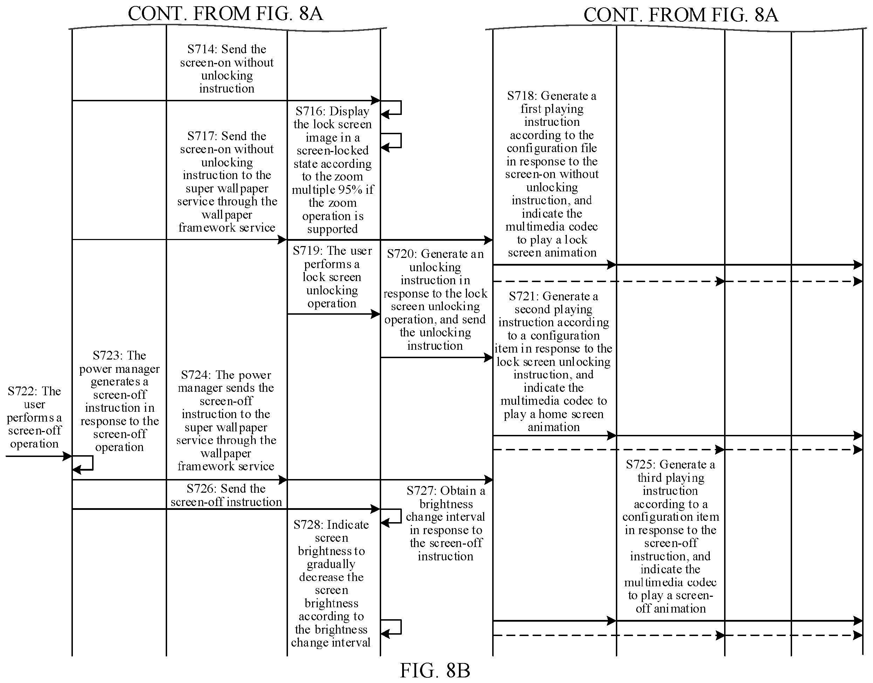

First, a process in which the user sets the theme package to make the selected wallpaper theme take effect is described. Refer to FIG. 8A and FIG. 8B.

S701: The user sets a wallpaper theme (a wallpaper type) of a super wallpaper.

It should be noted that there may be a plurality of types of wallpaper themes, for example, the super wallpaper, a 3D wallpaper, a live wallpaper, and a foldable wallpaper. Display effects of different wallpaper themes are different.

Specifically, the user may perform an operation on the terminal device, to open a Home screen & Wallpaper interface shown in a in FIG. 4 from Settings > Home screen & Wallpaper, and then tap a theme card to enter a setting page for the theme package. The user selects the needed wallpaper theme of the super wallpaper from a plurality of candidate wallpaper themes on the setting page.

S702: A theme module sets a package name (for example, live.wallpaper.paradise) of a super wallpaper service in response to the operation of selecting the wallpaper theme of the super wallpaper by the user, and launches the super wallpaper service by using a wallpaper framework service.

Specifically, the theme package launches the corresponding super wallpaper service (SuperWallpaperService) through the wallpaper framework service according to the package name of the super wallpaper service in response to the operation of selecting the wallpaper theme of the super wallpaper by the user. Optionally, if the user selects the wallpaper theme of the live wallpaper, a live wallpaper service is launched, and a live wallpaper effect is displayed.

S703: The super wallpaper service obtains a resource corresponding to the wallpaper theme according to the wallpaper theme.

Specifically, the super wallpaper service obtains resources, such as a lock screen animation, a home screen animation, a lock screen image, and a home screen wallpaper, corresponding to the super wallpaper from a preset resource path according to the wallpaper theme of the super wallpaper.

Optionally, the resource path may be: /product h/region comm/china/themes/FoldingFan.hwt. FoldingFan.hweight is a resource package corresponding to the wallpaper theme of the super wallpaper, and the resource package may be a file in an hwt format.

S704: The wallpaper framework service further sends a broadcast message carrying the current wallpaper theme to SystemUI.

For example, if a wallpaper theme used before the user sets a new wallpaper theme is the 3D wallpaper, the wallpaper framework service further sends the broadcast message to SystemUI after the user selects the wallpaper theme of the super wallpaper. The broadcast message carries an identifier (for example, the package name) of the super wallpaper, representing that the wallpaper theme is switched from the 3D wallpaper to the super wallpaper.

S705: The super wallpaper service parses, under the launching by the wallpaper framework service, a configuration file of the corresponding theme package according to the wallpaper theme.

Optionally, the configuration file may be a file in an xml format, for example, named livepaper.xml. The configuration file includes a plurality of configuration items, and the plurality of configuration items are used for configuring playing modes of the lock screen animation and the home screen animation.

To clearly describe the technical solutions of this application, the configuration items are described in detail herein. The plurality of configuration items in the configuration file include, but are not limited to, a part or all of the following configuration items 1 to 16:
1. support_background_blur (support background blur): represents whether a blur effect exists when a screen is swiped in a screen-locked state. For example, when a value of the configuration item is false, there is no blur effect when the screen is swiped in the screen-locked state. When a value of the configuration item is true, there is a blur effect when the screen is swiped in the screen-locked state.
2. support_dark_mode (support a dark mode): represents whether to follow a system color. For example, when a value of the configuration item is false, the lock screen animation, the home screen animation, and the like can support the dark mode. When a value of the configuration item is true, the lock screen animation, the home screen animation, and the like cannot support the dark mode.
3. aod_to_lock_total_frame (total quantity of frames from a local AOD state to a screen-locked state): represents a total quantity of frames of an animation from a local AOD mode to the screen-locked state.
4. lock_to_launcher_total_frame (total quantity of frames from the screen-locked state to a home screen): represents a total quantity of frames of an animation from the screen-locked state to the home screen.

In this embodiment of this application, the animation from the local AOD mode to the screen-locked state and the animation from the screen-locked state to the home screen may be stored as one video file, and a to-be-played video interval in the video file is determined according to a specific configuration item in different scenarios.

For example, when the configuration item aod_to_lock_total_frame is 51, it indicates that the animation from the local AOD mode to the screen-locked state includes 51 frames of images in total. The 51 frames of images may be played in a process in which the terminal device enters the screen-locked state from the AOD mode.

For another example, when the configuration item lock_to_launcher_total_frame is 35, it indicates that the animation from the screen-locked state to the home screen includes 35 frames of images in total. If the animation from the local AOD mode to the screen-locked state and the animation from the screen-locked state to the home screen belong to a video file including 86 (51+35) frames of images in total, a video interval from the 52^{nd} frame to the 86^{th} frame in the video file is played in the process in which the terminal device is unlocked from the screen-locked state to enter the home screen, that is, last 35 frames of images in the 86 frames are played.

5. aod_style (AOD style): represents an AOD style corresponding to the super wallpaper.

For example, when aod_style is WisdomLightclock; Wisdom_Light, WisdomLightclock is an identifier (for example, a name) of the AOD style, and Wisdom_Light is an identifier (for example, a name) of an AOD theme. An AOD module may display the corresponding AOD theme and style in the AOD mode according to the names of the AOD style and the AOD theme that are configured in the configuration item. Optionally, the configuration item of the AOD style may be used for configuring the AOD style in the local AOD mode.

6. aod_support_transition_animation (support transition from a screen-off animation): represents whether gradual darkening of screen brightness after playing of a screen-off animation is completed is supported, to transition to an always-on screen.

For example, when the configuration item is false, it indicates that the gradual darkening of the screen brightness after playing of an animation of the super wallpaper is completed is not supported. When the configuration item is set to true, it indicates that the gradual darkening of the screen brightness after playing of an animation of the super wallpaper is completed is supported. Optionally, the configuration item may be false by default. Optionally, the configuration item may be used for configuring a display mode in the local AOD mode. Because a black region on the always-on screen in the local AOD mode occupies a large proportion, the configuration item may enable the screen brightness to be gradually darkened after the playing of the animation of the super wallpaper is completed, to transition to the always-on screen in the local AOD mode, so that no abrupt transition occurs.

7. support_frame_extraction (support frame extraction of the screen-off animation): indicates whether the screen-off animation supports frame extraction. The screen-off animation is an animation played in a process of switching from a screen-on state to an always-on state of the screen. When the configuration item is false, it indicates that the frame extraction is not supported, and playing can only be performed frame by frame. When the configuration item is true, it indicates that the frame extraction is supported. In this case, a frame extraction mode may be further set according to another configuration item, for example, the configuration item 11 (a default segment of the screen-off animation) below.

8. extract_stage_one_orig_anim_frame (total quantity of frames of a first segment of animation).

9. extract_stage_two_orig_anim_frame (total quantity of frames of a second segment of animation).

Specifically, extract_stage_one_orig_anim_frame and extract_stage_two_orig_anim_frame are configuration items for the frame extraction mode. A video file on which frame extraction needs to be performed is divided into three video intervals by using the two configuration items. extract_stage_one_orig_anim_frame indicates a total quantity of frames of a first video interval, and extract_stage_two_orig_anim_frame indicates a total quantity of frames of a second video interval. Other frames than the first video interval and the second video interval in the video file are a third video interval. That is, a total quantity of frames of the third video interval is a total quantity of frames of the video file minus the total quantity of frames of the first video interval and the total quantity of frames of the second video interval.

An example in which the video file includes a total of 86 frames of images is used. When a value of support_frame_extraction indicates that the frame extraction is supported, extract_stage_one_orig_anim_frame is 86, and extract_stage_two_orig_anim__frame is 0, it indicates that the entire video file is allocated to the first video interval in this case.

For another example, when a value of support_frame_extraction indicates that the frame extraction is supported, extract_stage_one_orig_anim_frame is 30, and extract_stage_two_orig_anim_frame is 30, it indicates that the total quantities of frames of the three video intervals are respectively 30, 30, and 26 (86-30-30). In addition, the first video interval includes the 1^{st} frame to the 30^{th} frame; the second video interval includes 30 frames starting from the 31^{st} frame, that is, ends at the 60^{th} frame; and the third video interval includes 26 frames starting from the 61^{st} frame, that is, ends at the 86^{th} frame.

Optionally, when the video file on which the frame extraction needs to be performed needs to be divided into a larger quantity of video intervals, a configuration item for another video interval may continue to be added according to the definition manners in the configuration items 8 and 9 to configure a total quantity of frames of the corresponding video interval.

10. aod_animation_segments (quantity of segments of an AOD animation): indicates a quantity of animations (videos) from the local AOD mode to the screen-locked state. For example, when the configuration item is 3, it indicates that the quantity of animations from the local AOD mode to the screen-locked state is 3. When the configuration item is 5, it indicates that the quantity of animations from the local AOD mode to the screen-locked state is 5. To describe a specific meaning of the configuration item, an animation in the local AOD mode is described herein.

In an all-day mode of the local AOD mode, to prevent the always-on image from being always displayed in a same location to cause screen burn-in, the always-on image gradually moves downwards from the top of the screen at a time interval. For example, when aod_animation_segments is 9, the always-on image may move downwards by one location every one minute from a first location at the top of the screen to continuously move to a ninth location at the bottom of the screen; and then after another minute, the always-on image moves downwards by one location every one minute from the first location. The process cycles repeatedly.

That is, in the local AOD mode, a location of the always-on image is in nine cases. To ensure coherence of an animation for entering a lock screen from the local AOD mode, a plurality of segments of animations may be used. In each segment of animation, a start location of the always-on image is different. For example, a start location corresponding to the always-on image in the first segment of animation is a second location. When the always-on image in the local AOD mode is in the first location, the second location, or a third location, the user wakes up the screen, and the terminal device plays the first segment of animation. The start location corresponding to the always-on image in the first segment of animation is the same as or close to the second location, and is also close to the first location and the third location, so that coherence of the animation for entering the lock screen from the local AOD mode can be ensured when the always-on image is in the first location, the second location, or the third location, and no obvious location change of the always-on image occurs. The manner in which a plurality of consecutive locations use a same animation may also be used for another location for correspondence, provided that start locations corresponding to the always-on image in the plurality of consecutive locations are the same as or close to the plurality of consecutive locations, thereby ensuring coherence of the animation. Optionally, when there are nine locations, steps between every two locations may be 40 pixels, and the nine locations may respectively correspond to five segments of animations, so that coherence of the animations is ensured on the premise that storage space is not excessively occupied due to a large quantity of animations.

Optionally, five locations may alternatively be set in the local AOD mode to display the always-on image in the local AOD mode, and steps between every two of the five locations may be 80 pixels. Optionally, the five locations may respectively correspond to three segments of animations. For example, a first location and a second location correspond to a first segment of animation, a third location corresponds to a second segment of animation, and a fourth location and a fifth location correspond to a third segment of animation. In this case, in the local AOD mode, if the always-on image moves to the first location or the second location, and the user performs a screen-on operation, the terminal device may play the first segment of animation. In the first segment of animation, a start location corresponding to the always-on image is closer to the first location and the second location than to other locations. If the always-on image moves to the third location, and when the user performs a screen-on operation, the terminal device may play the second segment of animation. In the second segment of animation, a start location corresponding to the always-on image is closer to the third location than to other locations. If the always-on image moves to the fourth location or the fifth location, and when the user performs a screen-on operation, the terminal device may play the third segment of animation. In the third segment of animation, a start location corresponding to the always-on image is closer to the fourth location and the fifth location than to other locations.

11. aod_to_lock_default_animation_stage (default segment of the screen-off animation): indicates a specific segment of animation that needs to be used by default in the screen-off animation (for entering the AOD mode from the screen-on state) and that is in the plurality of segments of animations for entering the lock screen in the foregoing local AOD mode. Optionally, when a quantity of the plurality of segments of animations is 3, the configuration item may be 1, and it indicates that the screen-off animation uses the first segment of animation; or when a quantity of the plurality of segments of animations is 5, the configuration item may be 2, and it indicates that the screen-off animation uses the second segment of animation.

For example, when the quantity of the plurality of segments of animations is 3, the entire video file may include 188 (51*3+35) frames of images, where the 1^{st} frame to the 51^{st} frame are the first segment of animation, the 52^{nd} frame to the 102^{nd} frame are the third segment of animation, the 103^{rd} frame to the 153^{rd} frame are the third segment of animation, and the 154^{th} frame to the 188^{th} frame are a video interval for entering the home screen from the lock screen.

12. support_off_screen_animation (support the screen-off animation): indicates whether the screen-off animation is supported.

When the configuration item is false, it indicates that the screen-off animation is not supported. If the user performs a screen-off operation, the terminal device may directly enter the always-on state or a screen-off state, and an animation effect is not displayed. When the configuration item is true, it indicates that the screen-off animation is supported. In this case, a display policy for the screen-off animation may be determined according to the foregoing configuration items 7, 8, 9, and 11.

For example, when the configuration item 7 is true, and the configuration items 8, 9, and 11 are respectively 51, 51, and 1, if the user performs the screen-off operation, the terminal device plays, in reverse according to a frame extraction multiple, a video interval from the 1^{st} frame to the 51^{st} frame corresponding to the first segment of animation in the video file. If the configuration item 11 is changed to 2, a video interval from the 52^{nd} frame to the 102^{nd} frame corresponding to the second segment of the animation in the video file is played in reverse through frame extraction. Others are not described in detail.

When the configuration item 7 is false (the frame extraction is not supported), and the configuration items 8, 9, and 11 are respectively 51, 51, and 1, if the user performs the screen-off operation, the terminal device plays the first segment of animation in the video file frame by frame in reverse, in other words, a video interval from the 1^{st} frame to the 51^{st} frame is played frame by frame in reverse.

It should be noted that, the frame extraction multiple represents a quantity of valid frames extracted during video playing. For example, if the frame extraction multiple is 2, it indicates that one frame is extracted from two frames, that is, one frame is extracted at an interval of one frame for playing. If the frame extraction multiple is 1.66, it indicates that two frames are extracted from every three frames, that is, two consecutive frames are extracted at an interval of one frame for playing. When a total quantity of animation frames remains unchanged, a larger frame extraction multiple indicates shorter playing duration of the screen-off animation, and a smaller frame extraction multiple indicates longer playing duration of the screen-off animation.

13. support_full_screen_aod (support a full-screen AOD mode): indicates whether the current wallpaper theme supports the full-screen AOD mode.

When a value of the configuration item is true, it indicates that the parsed resource package of the super wallpaper includes a resource related to the full-screen AOD mode, and can support a display requirement in the full-screen AOD mode. When a value of the configuration item is false, it indicates that the parsed resource package of the super wallpaper does not include a resource related to the full-screen AOD mode, cannot support a display requirement in the full-screen AOD mode, and can only support running of the local AOD mode.

Optionally, in some wallpaper themes, the full-screen AOD mode may be preferred. In this case, the value of the configuration item is true by default.

14. aod_to_lock_total_frame_full_aod (total quantity of frames from the full-screen AOD mode to the screen-locked state): indicates a total quantity of frames of an animation for entering the screen-locked state from the full-screen AOD mode. For example, when the configuration item is 36, it indicates that the total quantity of frames of the animation for entering the screen-locked state from the full-screen AOD mode is 36.

15. lock_to_launcher_total_frame_full_aod (total quantity of frames from the screen-locked state to the home screen in the full-screen AOD mode): indicates a total quantity of frames of an animation for entering the home screen from the screen-locked state in the full-screen AOD mode. For example, when the configuration item is 35, if the total quantity of frames for entering the screen-locked state from the full-screen AOD mode is 36, a video file corresponding to the full-screen AOD mode includes 71 (35+36) frames.

16. super_wallpaper_scheme (support a depth-of-field mode): indicates whether the wallpaper theme supports the depth-of-field effect. If a configuration value of the configuration item matches the current wallpaper theme, it indicates that the current wallpaper theme supports the depth-of-field effect. If a configuration value of the configuration item does not match the current wallpaper theme, it indicates that the current wallpaper theme does not support the depth-of-field effect. For example, in three wallpaper themes, the three wallpaper themes respectively correspond to a scheme 1, a scheme 2, and a scheme 3. If configuration values of the configuration item are 1 and 3, and the current wallpaper theme corresponds to the scheme 2, it indicates that the configuration values (1 and 3) of the configuration item do not match the current wallpaper theme, and the current wallpaper theme does not support the depth-of-field effect; or if the current wallpaper theme corresponds to the scheme 1 or the scheme 3, it indicates that the configuration values of the configuration item match the current wallpaper theme, and the current wallpaper theme supports the depth-of-field effect.

Based on the descriptions of the foregoing configuration items 1 to 16, it may be learned that, regardless of whether the always-on state is the local AOD mode or the full-screen AOD mode, the animation for entering the screen-locked state from the always-on state and the animation for entering the home screen from the screen-locked state may use a same video file. In addition, at different display stages, different video intervals may be configured according to related items in the foregoing configuration items, and the corresponding video intervals are displayed according to the display stages.

S706: The theme module obtains, from the configuration file, a target configuration item corresponding to the wallpaper theme and a configuration value, and writes the target configuration item and the configuration value into a setting database.

For example, the theme module may obtain the target configuration item in the configuration file according to the wallpaper theme, and write the target configuration item into the database. When a configuration item for the always-on state indicates that the local AOD mode is supported, configuration items related to the local AOD mode, such as support_dark_mode being true, aod_animation_segments being 3, aod_to_lock_total_frame being 51, lock_to_launcher_total_frame being 35, aod_style being (WisdomLightclock; Wisdom_Light), extract_stage_one_orig_anim_frame being 86, extract_stage_two_orig_anim_frame being 0, and aod_to_lock_default_animation_stage being 1, and corresponding configuration values are written into the setting database.

For another example, the theme module may alternatively write configuration items related to the full-screen AOD mode, such as support_dark_mode being true, support_full_screen_aod being true, aod_to_lock_total_frame_full_aod being 36, and lock_to_launcher_total_frame_full_aod being 35, and corresponding configuration values into the setting database when a configuration item for the always-on state indicates that the full-screen AOD mode is supported.

Optionally, other configuration items may be selectively written according to a requirement.

Optionally, when the configuration item for the always-on state is supporting the local AOD mode and the full-screen AOD mode, both the configuration items related to the local AOD mode and the configuration items related to the full-screen AOD mode may be written into the setting database for invoking.

Optionally, the theme module may further learn that a color mode of a current system is a dark mode or a light mode, and write the color mode into the setting database for the super wallpaper service to read.

S707: The super wallpaper service obtains the target configuration item, the corresponding configuration value, the color mode of the system, and a supported always-on state from the setting database according to the wallpaper theme.

Optionally, the supported always-on state indicates whether the local AOD mode or the full-screen AOD mode is currently supported. The supported always-on state includes any one of the following states:
global_only: indicates that the wallpaper theme supports only the full-screen AOD mode;
local_only global: indicates that the wallpaper theme supports only the local AOD mode;
global_local_recommend_global: indicates that the wallpaper theme is preferentially used in the full-screen AOD mode;
global_local_recommend_local: indicates that the wallpaper theme is preferentially used in the local AOD mode; and
global_and_local: indicates that the full-screen AOD mode and the local AOD mode are supported.

Optionally, the target configuration item may further include a part or all of the configuration items 1 to 16 and a configuration value corresponding to each configuration item.

S708: SystemUl obtains a corresponding lock screen image according to the wallpaper theme carried in the received broadcast message, the color mode of the system, and the AOD state, and loads the lock screen image.

Optionally, if the depth-of-field effect is currently set, and the full-screen AOD mode is applied, SystemUI reads, from the parsed resource package according to the received wallpaper theme, a lock screen image matching the wallpaper theme, and loads the lock screen image. The lock screen image may be an image the same as a last frame of the lock screen animation mentioned above, may also be referred to as a placeholder image in the screen-locked state, and is displayed at an upper layer of a time layer after the playing of the lock screen animation is completed, so that display of the lock screen and the home screen is coherent, to improve a display effect, thereby improving user experience. Later, if the user performs a screen-on operation, for example, unlocking, the layer of the lock screen image (the placeholder image) is destroyed and is no longer displayed.

For example, SystemUI may determine, when the color mode of the system is the dark mode and the AOD state is the local AOD mode, that the placeholder image is dark_Aod_live_wallpaper.jpg. When the color mode is the light mode, and the AOD mode is the local AOD mode, the super wallpaper service determines that the placeholder image is Aod_live_wallpaper.jpg. When the color mode is the dark mode, and the AOD state is the full-screen AOD mode, SystemUI determines that the placeholder image is dark dark_fullAod_live_wallpaper.jpg. When the color mode is the light mode, and the AOD state is the full-screen AOD mode, SystemUI determines that the placeholder image is fullAod_live_wallpaper.jpg.

Optionally, if the depth-of-field effect is not set currently, SystemUI does not need to read the lock screen image, thereby simplifying an operation, and saving resources.

S709: The super wallpaper service obtains a corresponding video file according to the color mode and the AOD state.

Specifically, the super wallpaper service may determine, according to the color mode of the current system and the AOD state, a video file that needs to be used for the animation. For example, when the color mode is the dark mode, and the AOD state is the local AOD mode, the super wallpaper service determines that the video file that needs to be used for the animation is dark video_live_wallpaper.mp4. When the color mode is the light mode, and the AOD mode is the local AOD mode, the super wallpaper service determines that the video file that needs to be used for the animation is video _live _wallpaper.mp4. When the color mode is the dark mode, and the AOD mode is the full-screen AOD mode, the super wallpaper service determines that the video file that needs to be used for the animation is dark video_live_wallpaper_fullAod.mp4. When the color mode is the light mode, and the AOD mode is the full-screen AOD mode, the super wallpaper service determines that the video file that needs to be used for the animation is video_live_wallpaper_fullAod.mp4.

In addition, the super wallpaper service may further indicate a multimedia codec to initialize the home screen according to the wallpaper theme currently set by the user, so that after setting the wallpaper theme and returning to the home screen, the user can see a home screen corresponding to the used wallpaper theme, and the user can clearly perceive a display state entered after the wallpaper theme is used, thereby achieving high interactivity.

A detailed procedure in which the terminal device uses the wallpaper theme that is set by the user is described through S701 to S709.

Then, if the user changes the AOD state, steps S708 and S709 in the foregoing procedure may be repeated to use a wallpaper theme for a new AOD state. For details, refer to descriptions of steps S710 and S711.

S710: SystemUI monitors the setting database, and obtains a new color mode of the system and a new AOD state.

It should be noted that the user changes the AOD state (for example, changes from the local AOD mode to the full-screen AOD mode, or changes from the full-screen AOD mode to the local AOD mode), and/or changes the color mode of the system (for example, changes from the dark mode to the light mode, or changes from the light mode to the dark mode).

For example, if the configuration item extract_stage_one_orig_anim_frame in the configuration file is changed from 86 to 36, a frame extraction interval of the screen-off animation changes to the 1^{st} frame to the 36^{th} frame in the video file. For another example, when the configuration item aod_style changes, the style of the always-on image displayed in the AOD state correspondingly changes.

S711: SystemUI obtains a new video file according to the new color mode of the system and the new AOD state that are refreshed and detected.

Optionally, if the depth-of-field effect is currently set, and the full-screen AOD mode is applied, SystemUI may obtain a new lock screen image according to the new color mode of the system and the new AOD state that are refreshed and detected, and load the new lock screen image.

For detailed descriptions of S710 and S711, refer to the descriptions of S708 and S709, and details are not described herein again.

A usage procedure for the wallpaper theme is described through S701 to S711 above. The following describes always-on screen display methods at different display stages based on a usage result of the foregoing usage procedure.

S712: The user performs a screen-on operation.

After the user completes setting the wallpaper theme and uses the wallpaper theme, the user performs a screen-off operation, and the terminal device may enter the AOD state. For a detailed process in which the terminal device enters the AOD state from a screen-on and unlocked state, refer to the following descriptions of a case that occurs after the screen-off operation, and details are not described herein.

After the terminal device enters the AOD state, if the user needs to use the terminal device, the user may press a power button to perform a screen-on without unlocking operation.

S713: A power manager generates a screen-on without unlocking instruction in response to the screen-on without unlocking operation.

The screen-on without unlocking instruction indicates the terminal device to enter the screen-on state, but a fingerprint is not entered for unlocking, that is, the screen-locked state is entered.

If the full-screen AOD mode is currently applied, the power manager may further perform operations of S714 to S716 in response to the screen-on without unlocking operation.

S714: The power manager sends the screen-on without unlocking instruction to SystemUI.

S715: SystemUI determines, in response to the screen-on without unlocking instruction, whether a 95% zoom operation can be performed on the lock screen image (the placeholder image).

Optionally, the zoom multiple 95% herein is merely an example, and may alternatively be another zoom multiple. This is not limited in this embodiment of this application.

S716: SystemUI displays the lock screen image in the screen-locked state according to the zoom multiple 95% if the zoom operation is supported. SystemUI displays, if the zoom operation is not supported, the placeholder image in the screen-locked state at an original size after the playing of the lock screen animation is completed.

It should be noted that, if the 95% zoom operation can be performed on the placeholder image, it indicates that in a new placeholder image obtained by separately proportionally reducing the length and the width of the placeholder image to 95% of the original size, the size of a target object is consistent or visually consistent with the size of a dynamically changing object in a last frame of the lock screen animation. In this way, coherence of the lock screen animation can be ensured, and a jump caused by a large difference between the size of the target object and the size of the dynamically changing object is avoided. The dynamically changing object is an object that dynamically changes frame by frame in the lock screen animation, for example, the two overlapping balloons shown in FIG. 5.

If the lock screen image supports the 95% zoom operation, SystemUI displays, above a layer in the screen-locked state, the new placeholder image obtained by performing zooming on the original lock screen image according to the 95% zoom multiple after the playing of the lock screen animation is completed. If the lock screen image does not support the 95% zoom operation, SystemUI displays the original image above a layer in the screen-locked state after the playing of the lock screen animation is completed. It should be noted that the lock screen image is the same as the last frame of image of the lock screen animation, so that a display effect from the lock screen animation to the screen-locked state is coherent, thereby improving user experience.

It should be noted that S715 and S716 are optional operations. SystemUI may directly present the lock screen image at the original size without determining whether the lock screen image supports the zoom operation.

S717: The power manager sends the screen-on without unlocking instruction to the super wallpaper service through the wallpaper framework service.

S718: The super wallpaper service generates a first playing instruction according to the configuration file in response to the screen-on without unlocking instruction, and indicates, according to the first playing instruction, the multimedia codec to play the lock screen animation.

It should be noted that if the terminal device is in the full-screen AOD mode, the first playing instruction is forwarded through a full-screen AOD module. The full-screen AOD module is a module in a screen locking process in SystemUI. If the terminal device is in the local AOD mode, the super wallpaper service forwards the first playing instruction through a local AOD module.

The multimedia codec plays the lock screen animation under support of a media playing service at the application framework layer in response to the first playing instruction.

In S709, the super wallpaper service has determined the video file that needs to be played. Herein, the super wallpaper service determines, based on the screen-on without unlocking instruction, that the lock screen animation from the AOD state to the screen-locked state needs to be played, then determines, based on related configuration items indicating the lock screen animation in the configuration file, a video interval that needs to be played in the video file, and generates the first playing instruction to indicate the multimedia codec to perform display.

For example, in the local AOD state, the video file determined by the super wallpaper service is dark video _live_wallpaper.mp4, and a total quantity of frames of the video file is 188. The related configuration items for the lock screen animation and configuration values include: support_dark_mode being true (indicating that the dark mode is supported), aod_animation_segments being 3 (indicating that a quantity of segments of animations in the local AOD mode is 3), aod_to_lock_total_frame being 153 (indicating that a total quantity of frames of the three segments of animations in the local AOD modes is 153), and extract_stage_one_orig_anim_frame being 51 (indicating that a total quantity of frames of the first segment of animation in the local AOD mode is 51). Currently, the local AOD mode is applied, and the always-on image is located in the first location at the top of the screen (correspondingly, the first segment of animation needs to be displayed). In this case, the super wallpaper service generates the first playing instruction according to the configuration items related to the lock screen animation and the corresponding configuration values, and indicates, according to the first playing instruction, the multimedia codec to play a video interval from the 1^{st} frame to the 51^{st} frame in dark video_live_wallpaper.mp4. The video interval is a lock screen animation from the local AOD mode to the screen-locked state. Optionally, if the always-on image is in the second location at the top of the screen in the local AOD mode, and extract_stage_two_orig_anim_frame is also 51, it indicates that the second segment in the animation segments in the local AOD mode needs to be played. In this case, a video interval from the 52^{nd} frame (a next frame of the first segment of animation) to the 102^{nd} frame (51+51) in dark video_live_wallpaper.mp4 is played.

For another example, the video file determined by the super wallpaper service is fullAod_live_wallpaper.mp4, a total quantity of frames is 86, and the configuration values of the related configuration items include support_full_screen_aod (the full-screen AOD mode is supported), support_dark_mode being false (the dark mode is not supported), and aod_to_lock_total_frame_full_aod being 35 (indicating that the lock screen animation is first 35 frames in the video file). Currently, the full-screen AOD mode is applied, and the super wallpaper service generates the first playing instruction according to the configuration items related to the lock screen animation and the corresponding configuration values, and indicates, according to the first playing instruction, the multimedia codec to play a video interval from the 1^{st} frame to the 35^{th} frame in fullAod_live_wallpaper.mp4. The video interval is a lock screen animation from the full-screen AOD mode to the screen-locked state. If the depth-of-field effect is currently displayed, SystemUI further displays the pre-loaded lock screen image (the placeholder image) after the animation from the full-screen AOD mode to the screen-locked state is played.

A detailed animation playing process is described herein by using an example in which the super wallpaper service indicates, according to the first playing instruction, the multimedia codec to play the lock screen animation. For example, when the full-screen AOD mode is currently applied, the super wallpaper service determines that the multimedia codec is to play the video interval from the 1^{st} frame to the 35^{th} frame in fullAod_live_wallpaper.mp4. The video interval is the lock screen animation from the full-screen AOD mode to the screen-locked state. The super wallpaper service generates the first playing instruction according to the related configuration items and the configuration values. The first playing instruction includes information for playing the 1^{st} frame to the 35^{th} frame.

The super wallpaper service indicates, according to a preset frame rate, the multimedia codec to play the 1^{st} frame to the 35^{th} frame. Using an example in which 60 frames are played per second, the super wallpaper service sends, to the multimedia codec at a first moment, a first sub-instruction for playing the 1^{st} frame, and the multimedia codec plays the 1^{st} frame in response to the first sub-instruction. The super wallpaper service sends, to the multimedia codec at a second moment, a second sub-instruction for playing the 2^{nd} frame, and the multimedia codec plays the 2^{nd} frame in response to the second sub-instruction. The super wallpaper service sends, to the multimedia codec at a third moment, a second sub-instruction for playing the 3^{rd} frame, and the multimedia codec plays the 3^{rd} frame in response to the second sub-instruction. The rest can be deduced by analogy, until the 35^{th} frame is played. Therefore, the user may see the screen-off animation that is continuously played. Optionally, if the multimedia codec receives no other instruction, the 35^{th} frame may be continuously displayed. It should be noted that an interval between a previous moment and a next moment is a preset interval, and the preset interval is related to the frame rate. For example, the preset interval is a quotient obtained by dividing the unit time by the frame rate. For example, when the frame rate is 100 frames per second, and the unit time is 1 second, the preset interval is 60 milliseconds. The super wallpaper service may send the sub-instructions at the preset interval of 60 milliseconds, to indicate the multimedia codec to perform playing frame by frame, to form the animation.

S719: The user performs a lock screen unlocking operation.

After the terminal device enters the screen-locked state, the user may further perform the unlocking operation in the screen-locked state, for example, enter a fingerprint in a fingerprint halo in the screen-locked state, or enter a password, a human face, or the like in the screen-locked state.

S720: SystemUI generates an unlocking instruction in response to the lock screen unlocking operation, and sends the unlocking instruction to the super wallpaper service.

It should be noted that, if the user swipes up the screen in the screen-locked state, the terminal device generates the lock screen unlocking instruction if the terminal device detects the human face and succeeds in authentication. The unlocking instruction may indicate the terminal device to play the home screen animation from the screen-locked state to the home screen to enter the home screen.

If the user swipes up the screen in the screen-locked state, the terminal device enters a lock screen password entry interface if the terminal device fails to detect the human face or the authentication on the detected human face fails. The terminal device generates the unlocking instruction if the user enters a correct unlocking password on the lock screen password entry interface.

If the configuration value of the configuration item support_background_blur is true, it indicates that the background blur is supported. In a process of entering the lock screen password entry interface, a password entry region is displayed on the lock screen password entry interface, a background is blurrily displayed, and the user cannot see a clear background image. If the configuration value of the configuration item support_background_blur is false, it indicates that the background blur is not supported. In a process of entering the lock screen password entry interface, a password entry region is displayed on the lock screen password entry interface, a background is not blurred, and an interface in the screen-locked state may be clearly displayed below the lock screen password entry region.

S721: The super wallpaper service generates a second playing instruction according to a configuration item in response to the lock screen unlocking instruction, and indicates the multimedia codec to play the home screen animation.

It should be noted that if the terminal device is in the full-screen AOD mode, the second playing instruction is forwarded through the full-screen AOD module. If the terminal device is in the local AOD mode, the super wallpaper service forwards the second playing instruction through the local AOD module.

For example, currently, the local AOD mode is applied, the video file determined by the super wallpaper service is dark video_live_wallpaper.mp4, and the total quantity of frames is 188. Configuration values of the related configuration items include: support_dark_mode being true (the dark mode is supported), aod_animation_segments being 3, aod_to_lock_total_frame being 153 (51*3), extract_stage_one_orig_anim_frame being 51, and extract_stage_two_orig_anim_frame being 51. The super wallpaper service generates the second playing instruction including the related configuration items, and indicates the multimedia codec to play a video interval from the 154^{th} frame (a frame after 51*3) to the 188^{th} frame (a last frame in the video file) in dark video_live_wallpaper.mp4. The video interval is a home screen animation from the screen-locked state to the home screen.

For another example, currently, the full-screen AOD mode is applied, the super wallpaper service determines that the video file is fullAod_live_wallpaper.mp4, and the total quantity of frames is 86. Configuration values of the related configuration items include: support_dark_mode being false (the dark mode is not supported) and lock_to_launcher_total_frame_full_aod being 35. In this case, the super wallpaper service indicates the multimedia codec to play a video interval from the 36^{th} frame (a next frame of the 35^{th} frame) to the 86^{th} frame (a last frame in the video file) in fullAod_live_wallpaper.mp4. The video interval is a home screen animation from the screen-locked state to the home screen.

Optionally, if the user directly performs an always-on screen unlocking operation in the AOD state, for example, directly presses the fingerprint halo with a finger in the AOD state, the terminal device continuously plays the animation from the AOD state to the screen-locked state and the animation from the screen-locked state to the home screen.

For example, currently, the local AOD mode is applied, the video file determined by the super wallpaper service is dark video_live_wallpaper.mp4, and the total quantity of frames is 188. Configuration values of the related configuration items include: support_dark_mode being true (the dark mode is supported), aod_animation_segments being 3, aod_to_lock_total_frame being 153 (51*3), extract_stage_one_orig_anim_frame being 51, and extract_stage_two_orig_anim_frame being 51. If the always-on image is in the first location at the top of the screen, the super wallpaper service indicates the multimedia codec to continuously play a video interval from the 1^{st} frame to the 51^{st} frame and a video interval from the 154^{th} frame (a frame after 51*3) to the 188^{th} frame (a last frame in the video file) in dark video_live_wallpaper.mp4. The video intervals are all animations from the local AOD mode to the home screen.

For another example, currently, the full-screen AOD mode is applied, the super wallpaper service determines that the video file is fullAod_live_wallpaper.mp4, and the total quantity of frames is 86. Configuration values of the related configuration items include: support_dark_mode being false (the dark mode is not supported) and lock_to_launcher_total_frame_full_aod being 35. In this case, the super wallpaper service indicates the multimedia codec to continuously play a video interval from the 1^{st} frame to the 86^{th} frame (a last frame in the video file) in fullAod_live_wallpaper.mp4. The video interval is all animations from the full-screen AOD mode to the home screen.

Optionally, if the full-screen AOD mode is currently applied, and the user performs the always-on screen unlocking operation, the terminal device continuously plays the lock screen animation from the AOD state to the screen-locked state and the home screen animation from the screen-locked state to the home screen, without displaying the placeholder image. The terminal device continuously plays the lock screen animation from the AOD state to the screen-locked state and the home screen animation from the screen-locked state to the home screen. In this way, a coherent unlocking process can be displayed, to improve a display effect, thereby improving user experience.

S722: The user performs a screen-off operation.

After completing using the terminal device, the user may press the power button to perform the screen-off operation.

S723: The power manager generates a screen-off instruction in response to the screen-off operation.

S724: The power manager sends the screen-off instruction to the super wallpaper service through the wallpaper framework service.

S725: The super wallpaper service generates a third playing instruction according to a configuration item in response to the screen-off instruction, and indicates the multimedia codec to play the screen-off animation.

It should be noted that if the terminal device is in the full-screen AOD mode, the third playing instruction is forwarded through the full-screen AOD module. If the terminal device is in the local AOD mode, the super wallpaper service forwards the third playing instruction through the local AOD module.

For example, the video file determined by the super wallpaper service is dark video_live_wallpaper.mp4, and the total quantity of frames is 188. Configuration values of the related configuration items include: support_dark_mode being true, aod_animation_segments being 3, aod_to_lock_total_frame being 153, extract_stage_one_orig_anim_frame being 51, support_off_screen_animation being true, support_frame_extraction being true, and aod_support_transition_animation being true. Currently, the local AOD mode is applied, and the super wallpaper service generates the third play instruction, and indicates the multimedia codec to play a video interval from the 1^{st} frame to the 51^{st} frame (a video interval corresponding to the first segment of animation) and a video interval from the 154^{th} frame to the 188^{th} frame in dark video_live_wallpaper.mp4 and play the video intervals in reverse through frame extraction, to form the screen-off animation. For example, when the frame extraction multiple is 2, the super wallpaper service generates the third playing instruction, and indicates the media codec to play the 188^{th} frame, the 186^{th} frame, the 184^{th} frame, the 182^{nd} frame, ..., and the 154^{th} frame in dark video_live_wallpaper.mp4, and then play the 51^{st} frame, the 49^{th} frame, the 47^{th} frame, ..., and the 1^{st} frame, where the playing is performed in sequence. Optionally, if support_frame_extraction is changed to false, the super wallpaper service generates the third playing instruction, and indicates the media codec to play the 188^{th} frame, the 187^{th} frame, the 186^{th} frame, the 185^{th} frame, ..., and the 154^{th} frame in dark video_live_wallpaper.mp4 and then play the 51^{st} frame, the 50^{th} frame, the 49^{th} frame, ..., and the 1^{st} frame, where the playing is performed frame by frame in reverse to form the screen-off animation.

For another example, the video file determined by the super wallpaper service is fullAod_live_wallpaper.mp4, the total quantity of frames is 86, and configuration values of the related configuration items include: support_dark_mode being false, lock_to_launcher_total_frame_full_aod being 35, support_off_screen_animation being true, support_frame_extraction being true, and aod_support_transition_animation being true. Currently, the full-screen AOD mode is applied, and the super wallpaper service generates the third play instruction, and indicates the multimedia codec to play a video interval from the 1^{st} frame to the 86^{th} frame in fullAod_live_wallpaper.mp4 and play the video interval in reverse through frame extraction, to form the screen-off animation. For example, when the frame extraction multiple is 2, the media codec selects the 86^{th} frame, the 84^{th} frame, the 82^{nd} frame, the 80^{th} frame, ..., and the 2^{nd} frame in fullAod_live_wallpaper.mp4, and plays the frames in sequence. Optionally, if support_frame_extraction is changed to false, the media codec selects the 86^{th} frame, the 85^{th} frame, the 84^{th} frame, the 83^{rd} frame, ..., and the 1^{st} frame in fullAod_live_wallpaper.mp4, and performs reverse playing frame by frame, to form the screen-off animation.

Optionally, based on the foregoing embodiment, a brightness gradient effect may further be set for the screen-off animation in the full-screen AOD mode. In a process of playing the screen-off animation, the screen brightness gradually darkens to be close to or consistent with brightness in the full-screen AOD mode, so that the display effect is more coherent, thereby improving user experience. For example, the method may include the following steps after S726:
S726: The power manager sends the screen-off instruction to SystemUI.
S727: SystemUI obtains a brightness change interval in response to the screen-off instruction.

In the process of playing the screen-off animation, SystemUI may obtain screen brightness in the screen-on state. Then, SystemUI obtains determines the brightness change interval between the screen brightness in the current state and a target brightness value, and determines a brightness change gradient according to the brightness change interval. The brightness change gradient can indicate the screen to gradually decrease the screen brightness. The target brightness value is lower than screen brightness in the current state, and is the same as or close to the brightness displayed in the full-screen AOD mode.

S728: SystemUI indicates the screen brightness to gradually decrease the screen brightness according to the brightness change interval.

Based on this, in the process of playing the screen-off animation, SystemUI gradually decreases the screen brightness according to the brightness change gradient, to adapt to a scenario of the screen-off animation. After the screen-off animation is completely played, the screen brightness is decreased to or approaches the target brightness value, and is the same as or close to the brightness displayed in the full-screen AOD mode, and there is no obvious brightness jump. In addition, in the process of completing playing the screen-off animation, the screen brightness gradually decreases the screen brightness according to the brightness change gradient, so that a display effect is coherent, and the brightness does not obviously jump, thereby improving user experience.

In this embodiment of this application, for a same AOD state and system color mode, display animations at different display stages (from the AOD state to the screen-locked state, from the screen-locked state to the home screen, and from the AOD state to the home screen) are set as one video file, and frames of images displayed at the different display stages are configured by using different configuration items, so that a quantity of video files can be reduced while the coherence of the animation effect is ensured, thereby facilitating management. In addition, when the animation effect needs to be modified, a configuration value of a corresponding configuration item may be modified without modifying software code. Therefore, an operation is more convenient and faster.

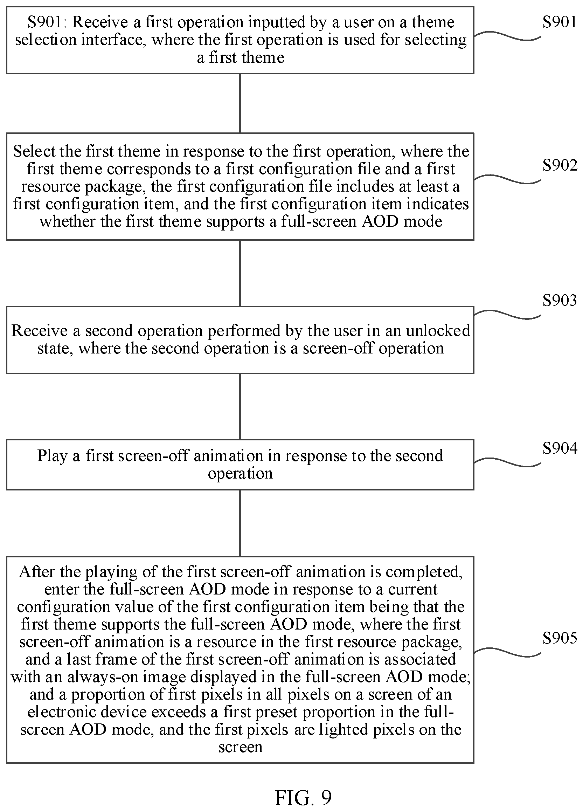

FIG. 9 shows an always-on screen display method. The method is applied to an electronic device, and includes the following steps.

S901: Receive a first operation inputted by a user on a theme selection interface, where the first operation is used for selecting a first theme.

The first operation is an operation of setting a wallpaper theme of a super wallpaper by the user. For example, on a Home screen & Wallpaper interface shown in a in FIG. 4, the user taps a theme card to enter a theme package setting page, and then selects the needed first theme, namely, a super wallpaper, from a plurality of candidate wallpaper themes on the setting page.

S902: Select the first theme in response to the first operation, where the first theme corresponds to a first configuration file and a first resource package, the first configuration file includes at least a first configuration item (for example, a configuration item 13), and the first configuration item indicates whether the first theme supports a full-screen AOD mode.

A terminal device may set, in response to the first operation, a package name of a super wallpaper service corresponding to the theme of the super wallpaper, to launch the super wallpaper service. Meanwhile, the terminal device parses the first configuration file and the first resource package that correspond to the first theme. Optionally, the first configuration file is a file in an xml format, for example, named livepaper.xml, and includes a plurality of configuration items. These configuration items are used for configuring playing modes of a lock screen animation and a home screen animation.

S903: Receive a second operation performed by the user in an unlocked state, where the second operation is a screen-off operation.

When completing setting the wallpaper theme, the user may perform the second operation, namely, the screen-off operation.

S904: Play a first screen-off animation in response to the second operation.

The electronic device may play the first screen-off animation in response to the second operation, to enter a screen-off state.

S905: After the playing of the first screen-off animation is completed, enter the full-screen AOD mode in response to a current configuration value of the first configuration item being that the first theme supports the full-screen AOD mode, where the first screen-off animation is a resource in the first resource package, and a last frame of the first screen-off animation is associated with an always-on image displayed in the full-screen AOD mode; and a proportion of first pixels in all pixels on a screen of the electronic device exceeds a first preset proportion in the full-screen AOD mode, and the first pixels are lighted pixels on the screen.

The last frame of the first screen-off animation is associated with the always-on image displayed in the full-screen AOD mode, that is, content displayed by the last frame and the always-on image is the same or similar. The user does not perceive an obvious screen jump in a process of switching from the last frame of the first screen-off animation to the full-screen AOD mode.

It should be noted that, in the full-screen AOD mode, a proportion of the area of the always-on image is large. Therefore, a large quantity of pixels are lighted on the screen. For example, all the pixels of the screen may be lighted to display the always-on image, or most pixels (for example, exceeding the first preset proportion such as 90% to 100%) are lighted.

If the current configuration value of the first configuration item is supporting the full-screen AOD mode, the full-screen AOD mode is entered after the screen-off animation is completed. If the current configuration value of the first configuration item is not supporting the full-screen AOD mode, a local AOD mode may be entered.

In the local AOD mode, the always-on image is small. In the local AOD mode, a small quantity of pixels are lightened on the screen. For example, pixels (for example, less than a second preset proportion such as 20%) on a small part of the screen may be lightened to display the always-on image.

After the user uses the first theme, if the user performs the screen-off operation, the terminal device may play the screen-off animation and enter the full-screen AOD mode based on an indication of the current configuration value of the first configuration item. Because the last frame of the screen-off animation is associated with the always-on image displayed in the full-screen AOD mode, and the content displayed by the last frame and the always-on image is the same or similar, there is no obvious screen jump in a process of entering the full-screen AOD mode after the playing of the screen-off animation is completed, and display effects are coherent, thereby improving user experience.

In some embodiments, the playing a first screen-off animation includes: obtaining a first video file, where the first video file is a resource in the first resource package, and the first video file corresponds to the full-screen AOD mode and a current color mode of a current system; playing the first screen-off animation according to a third configuration item in response to a current configuration value of a second configuration item (for example, a configuration item 12) being supporting playing of the screen-off animation, where the second configuration item and the third configuration item (for example, a configuration item 7) are configuration items in the first configuration file, the second configuration item indicates whether the playing of the screen-off animation is supported, and the third configuration item indicates whether frame extraction is supported when the screen-off animation is played; performing frame extraction on the first video file according to a preset frame extraction multiple when a current configuration value of the third configuration item is supporting the frame extraction when the first screen-off animation is played, to obtain a first frame extraction sequence, where a sorting order of a plurality of video frames in the first frame extraction sequence is the same as a sorting order of the plurality of video frames in the first video file; and playing the first frame extraction sequence in reverse, to play the first screen-off animation.

The terminal device may search the first resource package for the corresponding first video file according to the current color mode of the current system and the full-screen AOD mode. If the current color mode is a dark mode, the first video file is a video file in the dark mode; or if the current color mode is a light mode, the first video file is a video file in the light mode. If a current AOD state is the full-screen AOD mode, the first video file is a video file displayed in full screen.

If the current configuration value of the second configuration item is supporting the playing of the screen-off animation, and the current configuration value of the third configuration item is supporting the frame extraction when the first screen-off animation is played, the first video file may be played in reverse through frame extraction according to the preset frame extraction multiple, to play the first screen-off animation.

If the current configuration of the second configuration item is supporting the playing of the screen-off animation, and the current configuration value of the third configuration item is not supporting the frame extraction when the screen-off animation is played, the frame extraction does not need to be performed on the first video file, and video frames in the first video file are played frame by frame in reverse, to play the first screen-off animation.

A playing mode and speed of the screen-off animation can be flexibly configured by using the second configuration item and the third configuration item, and usage scenarios are richer.

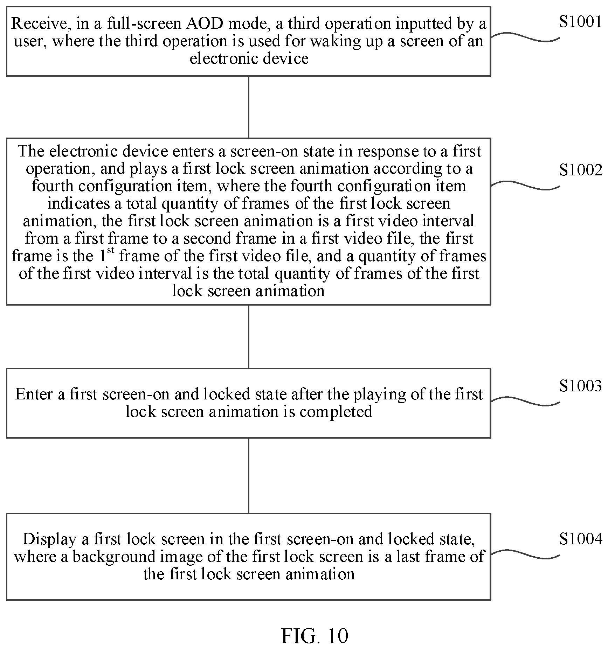

In some embodiments, the always-on screen display method may further be shown in FIG. 10, and includes the following steps.

S1001: Receive, in the full-screen AOD mode, a third operation inputted by the user, where the third operation is used for waking up the screen of the electronic device.

In the full-screen AOD mode, the user performs the third operation of waking up the screen, for example, pressing a power button.

S1002: The electronic device enters a screen-on state in response to the first operation, and plays a first lock screen animation according to a fourth configuration item (for example, a configuration item 14), where the fourth configuration item indicates a total quantity of frames of the first lock screen animation, the first lock screen animation is a first video interval from a first frame to a second frame in the first video file, the first frame is the 1^{st} frame of the first video file, and a quantity of frames of the first video interval is the total quantity of frames of the first lock screen animation.

The electronic device enters the screen-on state in response to the third operation of waking up the screen. In this case, a password is not entered in the third operation, and the electronic device is still locked, but plays the first video interval from the first frame to the second frame in the first video file according to the total quantity that is of frames of the first lock screen animation and that is indicated by the fourth configuration item, to play the first lock screen animation. For example, when the fourth configuration item is 36, the electronic device plays the first video interval from the 1^{st} frame to the 36^{th} frame in the first video file, to play the first lock screen animation.

S1003: Enter a first screen-on and locked state after the playing of the first lock screen animation is completed.

S1004: Display a first lock screen in the first screen-on and locked state, where a background image of the first lock screen is a last frame of the first lock screen animation.

The electronic device displays the first lock screen in the first screen-on and locked state. The background image of the first lock screen is the last frame of the first lock screen animation, so that coherent animations are displayed without a screen jump in a process of entering the lock screen from the full-screen AOD state, thereby improving user experience.

In some embodiments, when the first theme supports a depth-of-field effect, and after the selecting the first theme in response to the first operation, the method includes: obtaining a first lock screen image from the first resource package, where the first lock screen image is a resource in the first resource package, and the first lock screen image and the second frame include same display content; and the step of displaying a first lock screen in the first screen-on and locked state includes: displaying the first lock screen in the first screen-on and locked state; and displaying the first lock screen image above a layer of the first lock screen.

If the first theme supports the depth-of-field effect, a layer of the first lock screen image may be generated above the layer of the lock screen, and is used for displaying the first lock screen image above the layer of the first lock screen. When another operation is received, the layer of the first lock screen is destroyed, and the first lock screen is displayed. Content displayed by the first lock screen image is the same as the last frame (namely, the second frame) of the first lock screen animation, so that the depth-of-field effect can be displayed, and the coherent animations are displayed without the screen jump in the process of entering the lock screen from the full-screen AOD state, thereby improving user experience.

In some embodiments, the method further includes: receiving, in the first screen-on and locked state, a fourth operation inputted by the user, where the fourth operation is used for unlocking the screen of the electronic device; playing a first home screen animation according to the fourth configuration item and a fifth configuration item (for example, a configuration item 15) in response to the fourth operation, where the fifth configuration item indicates a total quantity of frames of the first home screen animation, the first home screen animation is a second video interval from a third frame to a fourth frame in the first video file, the third frame is a next frame of the second frame, and a quantity of frames of the second video interval is the total quantity of frames of the first home screen animation; and displaying a first home screen after the playing of the first home screen animation is completed, where a background image of the first home screen is the fourth frame.

If the user receives, when the first lock screen is displayed, the fourth operation of unlocking the electronic device by the user, the first home screen animation may be played to enter the home screen. Specifically, the electronic device may play the second video interval between a next frame of the third frame indicated by the fourth configuration item and the fourth frame indicated by the fifth configuration item, to play the first home screen animation. Because the background image of the first home screen is the fourth frame, a display effect of entering the home screen from the lock screen is coherent without the screen jump, thereby improving user experience.

In some embodiments, the method further includes: receiving, in the full-screen AOD mode, a fifth operation inputted by the user, where the fifth operation is used for unlocking the screen of the electronic device; entering, by the electronic device, a screen-on and unlocked state in response to the fifth operation, and playing the first video file according to a fourth configuration item and a fifth configuration item, where the fourth configuration item and the fifth configuration item are configuration items in the first configuration file, the first video file includes a first lock screen animation and a first home screen animation, the fourth configuration item indicates a total quantity of frames of the first lock screen animation, the fourth configuration item indicates the total quantity of frames of the first lock screen animation, the first lock screen animation is a first video interval from a first frame to a second frame in the first video file, the first frame is the 1^{st} frame of the first video file, a quantity of frames of the first video interval is the total quantity of frames of the first lock screen animation, the fifth configuration item indicates a total quantity of frames of the first home screen animation, the first home screen animation is a second video interval from a third frame to a fourth frame in the first video file, the third frame is a next frame of the second frame, and a quantity of frames of the second video interval is the total quantity of frames of the first home screen animation; and displaying a first home screen after the playing of the first video file is completed, where a background image of the first home screen is the fourth frame.

If the user directly performs, in the full-screen AOD mode, the fifth operation of unlocking the screen, for example, touches the fingerprint halo displayed in the AOD mode to enter a fingerprint for unlocking, the terminal device may continuously play the first lock screen animation and the first home screen animation to enter the home screen. A display effect in this process is coherent. Because the background image of the first home screen is the fourth frame, a display effect of entering the home screen from the lock screen is coherent. In addition, because the background image of the first home screen is the fourth frame, a display effect of entering the home screen from the lock screen is coherent without a screen jump, thereby improving user experience.

In some embodiments, the method in this embodiment of this application may further include: receiving a sixth operation inputted by the user, where the sixth operation is an AOD state switching operation; switching from the full-screen AOD mode to a local AOD mode in response to the sixth operation; receiving a seventh operation performed by the user in a screen-on and unlocked state, where the seventh operation is a screen-off operation; playing a second screen-off animation in response to the seventh operation; and entering the local AOD mode after the playing of the second screen-off animation is completed, where the second screen-off animation is a resource in the first resource package, and a last frame of the second screen-off animation is associated with an always-on image displayed in the local AOD mode. A proportion of first pixels in all the pixels on the screen of the electronic device is less than a second preset proportion in the local AOD mode, and the second preset proportion is less than the first preset proportion.

When the user performs the sixth operation of switching an AOD state on an AOD state setting interface, the terminal device switches from the full-screen AOD mode to the local AOD mode in response to the sixth operation. If the user performs the seventh operation to turn off the screen, the terminal device may play the second screen-off animation corresponding to the local AOD mode.

It should be noted that, the last frame of the second screen-off animation is associated with the always-on image displayed in the local AOD mode, that is, content displayed by the last frame and the always-on image is the same or similar. The user does not perceive an obvious screen jump in a process of switching from the last frame of the second screen-off animation to the local AOD mode, thereby improving user experience. The method supports switching between different AOD states, is highly flexible, and can adapt to different requirements of the user.

In some embodiments, the playing a second screen-off animation includes: obtaining a second video file, where the second video file is a video file in the first resource package, and the second video file corresponds to the local AOD mode and a current color mode; determining a first to-be-played interval from the second video file according to a sixth configuration item (for example, a configuration item 10), a seventh configuration item (for example, a configuration item 11), an eighth configuration item (for example, a configuration item 3), a ninth configuration item (for example, a configuration item 8), a tenth configuration item (for example, a configuration item 9), and an eleventh configuration item (for example, a configuration item 4), where a sorting order of a plurality of video frames in the first to-be-played interval is the same as a sorting order of the plurality of video frames in the second video file, the first to-be-played interval includes a target local lock screen animation and a second home screen animation, the sixth configuration item indicates a quantity of a plurality of segments of local lock screen animations (a plurality of segments of animations) in the second video file, the plurality of segments of local lock screen animations correspond to a plurality of display locations of the always-on image in the local AOD mode, the seventh configuration item indicates the target local lock screen animation corresponding to the second screen-off animation, the target local lock screen animation is one of the plurality of segments of local lock screen animations, the eighth configuration item indicates a total quantity of frames of the plurality of segments of local lock screen animations, the ninth configuration item indicates a total quantity of frames of a first segment of local lock screen animation in the plurality of segments of local lock screen animations, the tenth configuration item indicates a total quantity of frames of a second segment of local lock screen animation in the plurality of segments of local lock screen animations, the eleventh configuration item indicates a total quantity of frames of the second home screen animation in the second video file, and the sixth configuration item, the seventh configuration item, the eighth configuration item, the ninth configuration item, the tenth configuration item, and the eleventh configuration item are configuration items in the first configuration file, where the first segment of local lock screen animation is a third video interval from a fifth frame to a sixth frame in the second video file, the fifth frame is the 1^{st} frame of the second video file, and a quantity of frames of the third video interval is the total quantity of frames of the first segment of local lock screen animation; the second segment of local lock screen animation is a fourth video interval from a seventh frame to an eighth frame in the second video file, the seventh frame is a next frame of the sixth frame, and a quantity of frames of the fourth video interval is the total quantity of frames of the second segment of local lock screen animation; the plurality of segments of local lock screen animations are a fifth video interval from the fifth frame to a ninth frame in the second video file, the fifth video interval includes the third video interval and the fourth video interval, and a quantity of frames of the fifth video interval is the total quantity of frames of the plurality of segments of local lock screen animations; and the second home screen animation is a sixth video interval from a tenth frame to an eleventh frame in the second video file, the tenth frame is a next frame of the ninth frame, and a quantity of frames of the sixth video interval is the total quantity of frames of the second home screen animation; playing the second screen-off animation according to a third configuration item in response to a current configuration value of a second configuration item being supporting playing of the screen-off animation, where the third configuration item indicates whether frame extraction is supported when the second screen-off animation is played; performing frame extraction on the first to-be-played interval according to a preset frame extraction multiple when a current configuration value of the third configuration item is supporting the frame extraction when the second screen-off animation is played, to obtain a second frame extraction sequence; and playing the second frame extraction sequence in reverse, to play the second screen-off animation.

The second video file includes the plurality of segments of local lock screen animations, and animation start locations are different in 1^{st} frames of the segments of local lock screen animations to correspond to different display locations of the always-on image in different local AOD modes.

In a screen-off process, the terminal device may select, based on the foregoing sixth configuration item to tenth configuration item, one segment from the plurality of segments of local lock screen animations as the target local lock screen animation, and then form the first to-be-played interval by using the target local lock screen animation and the second home screen animation. Then, the terminal device may play the second screen-off animation according to the indication of the foregoing configuration items. Specifically, when the current configuration value of the third configuration item is supporting the frame extraction when the second screen-off animation is played, the first to-be-played interval is played in reverse through frame extraction, to play the second screen-off animation. If the current configuration value of the third configuration item is not supporting the frame extraction when the screen-off animation is played, the first to-be-played interval is played frame by frame in reverse, to play the second screen-off animation.

A playing region, mode, and speed of the screen-off animation can be flexibly configured by using the foregoing configuration items, and usage scenarios are richer.

Because the last frame of the second screen-off animation is associated with the always-on image displayed in the local AOD mode, and the last frame and the always-on image display same or similar content, there is no obvious screen jump, thereby improving user experience.

In some embodiments, the method further includes: receiving, in the local AOD mode, an eighth operation inputted by the user, where the eighth operation is used for waking up the screen of the electronic device; entering, by the electronic device, a screen-on state in response to the eighth operation, and playing a second lock screen animation according to the ninth configuration item, the tenth configuration item, the eleventh configuration item, and a current display location of the always-on image in the local AOD mode, where the second lock screen animation is one of the plurality of segments of local lock screen animations, and the 1^{st} frame in the second lock screen animation is associated with the current display location; entering a second screen-on and locked state after the playing of the second lock screen animation is completed; and displaying a second lock screen in the second screen-on and locked state, where a background image of the second lock screen is a last frame of the second lock screen animation.

In the local AOD mode, if the user enters a fingerprint in the fingerprint halo on the always-on screen, the terminal device may determine, from the plurality of segments of local lock screen animations according to the ninth configuration item, the tenth configuration item, the eleventh configuration item, and the current display location of the always-on image in the local AOD mode, a segment of animation whose start location is closest to the current display location, and play the segment of animation as the second lock screen animation.

Because the background image of the second lock screen is the last frame of the second lock screen animation, there is no obvious screen jump in an unlocking process, thereby improving user experience.

In some embodiments, the method further includes: receiving, in the second screen-on and locked state, an eighth operation inputted by the user, where the eighth operation is used for unlocking the screen of the electronic device; playing the second home screen animation according to the eighth configuration item and the eleventh configuration item in response to the eighth operation; and displaying a second home screen after the playing of the second home screen animation is completed, where a background image of the second home screen is the eleventh frame.

If the terminal device receives, in the second screen-on and locked state, the unlocking operation inputted by the user, for example, an operation of inputting a fingerprint for unlocking, the electronic device may play the second home screen animation indicated by the eighth configuration item and the eleventh configuration item, and enter the second home screen. Because the background image of the second home screen is the last frame of the second video file, a display effect is coherent.

In some embodiments, the method further includes: receiving, in the local AOD mode, a ninth operation inputted by the user, where the ninth operation is used for unlocking the screen of the electronic device; entering, by the electronic device, a screen-on state in response to the ninth operation, and sequentially playing a second lock screen animation and a second home screen animation according to a ninth configuration item, a tenth configuration item, an eleventh configuration item, and a current display location of the always-on image in the local AOD mode, where the second lock screen animation is one of a plurality of segments of local lock screen animations in a second video file, the second video file is a resource in the first resource package, the plurality of segments of local lock screen animations correspond to a plurality of display locations of the always-on image in the local AOD mode, the 1^{st} frame in the second lock screen animation is associated with the current display location, the ninth configuration item indicates a total quantity of frames of a first segment of local lock screen animation in the plurality of segments of local lock screen animations, the tenth configuration item indicates a total quantity of frames of a second segment of local lock screen animation in the plurality of segments of local lock screen animations, the eleventh configuration item indicates a total quantity of frames of the second home screen animation in the second video file, and the ninth configuration item, the tenth configuration item, and the eleventh configuration item are configuration items in the first configuration file; and displaying a second home screen after the playing of the second home screen animation is completed, where a background image of the second home screen is a last frame of the second home screen animation.

If the user directly performs the ninth operation in the local AOD mode to unlock the screen, for example, enters a fingerprint in the AOD mode, the terminal device determines, according to the current display location of the always-on image in the local AOD mode, a local lock screen animation closest to a start location of the current display location, and then sequentially plays the local lock screen animation and the second home screen animation to enter the second home screen. Therefore, a display effect of entering the home screen from the AOD state is coherent, and no screen jump occurs, thereby improving user experience.

The foregoing describes in detail the examples of the method provided in this application. It may be understood that to implement the foregoing functions, a corresponding apparatus includes corresponding hardware structures and/or software modules for performing the functions. A person skilled in the art should easily be aware that, in combination with units and algorithm steps of the examples described in the embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In this application, an always-on screen apparatus may be divided into functional modules based on the foregoing method examples. For example, each functional module may be obtained through division based on each function, or two or more functions may be integrated into one module. The integrated module may be implemented in a form of hardware, or may be implemented in a form of a software functional module. It should be noted that, in this application, the division into modules is an example, and is merely a logical function division. In an actual implementation, another division manner may be used.

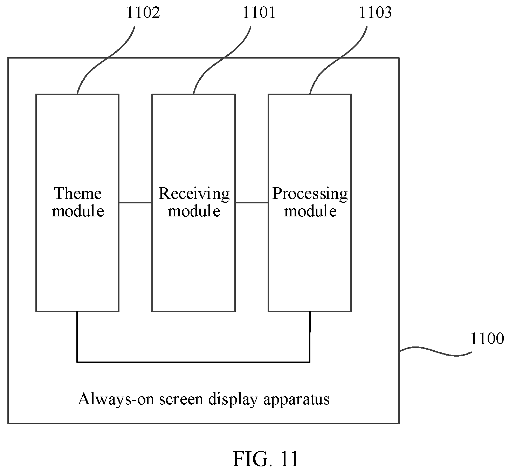

FIG. 11 is a schematic structural diagram of an always-on screen display apparatus according to this application. The apparatus 1100 is used in an electronic device, and includes:
a receiving module 1101, configured to receive a first operation inputted by a user on a theme selection interface, where the first operation is used for selecting a first theme;
a theme module 1102, configured to select the first theme in response to the first operation, where the first theme corresponds to a first configuration file and a first resource package, the first configuration file includes at least a first configuration item, and the first configuration item indicates whether the first theme supports a full-screen AOD mode, where
the receiving module 1101 is further configured to receive a second operation performed by the user in an unlocked state, where the second operation is a screen-off operation; and
a processing module 1103, configured to: play a first screen-off animation in response to the second operation; and after the playing of the first screen-off animation is completed, enter the full-screen AOD mode in response to a current configuration value of the first configuration item being that the first theme supports the full-screen AOD mode, where the first screen-off animation is a resource in the first resource package, and a last frame of the first screen-off animation is associated with an always-on image displayed in the full-screen AOD mode; and a proportion of first pixels in all pixels on a screen of the electronic device exceeds a first preset proportion in the full-screen AOD mode, and the first pixels are lighted pixels on the screen.

In some embodiments, the processing module 1103 is specifically configured to: obtain a first video file, where the first video file is a resource in the first resource package, and the first video file corresponds to the full-screen AOD mode and a current color mode of a current system; play the first screen-off animation according to a third configuration item in response to a current configuration value of a second configuration item being supporting playing of the screen-off animation, where the second configuration item and the third configuration item are configuration items in the first configuration file, the second configuration item indicates whether the playing of the screen-off animation is supported, and the third configuration item indicates whether frame extraction is supported when the screen-off animation is played; and perform frame extraction on the first video file according to a preset frame extraction multiple when a current configuration value of the third configuration item is supporting the frame extraction when the first screen-off animation is played, to obtain a first frame extraction sequence, where a sorting order of a plurality of video frames in the first frame extraction sequence is the same as a sorting order of the plurality of video frames in the first video file; and play the first frame extraction sequence in reverse, to play the first screen-off animation; or play video frames in the first video file frame by frame in reverse when a current configuration value of the third configuration item is not supporting the frame extraction when the first screen-off animation is played, to play the first screen-off animation.

In some embodiments, the receiving module 1101 is further configured to receive, in the full-screen AOD mode, a third operation inputted by the user, where the third operation is used for waking up the screen of the electronic device. The processing module 1103 is specifically configured to: enter, by the electronic device, a screen-on state in response to the first operation; play a first lock screen animation according to a fourth configuration item; enter a first screen-on and locked state after the playing of the first lock screen animation is completed; and display a first lock screen in the first screen-on and locked state, where the fourth configuration item indicates a total quantity of frames of the first lock screen animation, the first lock screen animation is a first video interval from a first frame to a second frame in the first video file, the first frame is the 1^{st} frame of the first video file, a quantity of frames of the first video interval is the total quantity of frames of the first lock screen animation, and a background image of the first lock screen is a last frame of the first lock screen animation.

In some embodiments, when the first theme supports a depth-of-field effect, the theme module 1102 is further configured to obtain a first lock screen image from the first resource package, where the first lock screen image is a resource in the first resource package, and the first lock screen image and the second frame include same display content. The processing module 1103 is specifically configured to display the first lock screen in the first screen-on and locked state, and display the first lock screen image above a layer of the first lock screen.

In some embodiments, the receiving module 1101 is further configured to receive, in the first screen-on and locked state, a fourth operation inputted by the user, where the fourth operation is used for unlocking the screen of the electronic device.

The processing module 1103 is further configured to: play a first home screen animation according to the fourth configuration item and a fifth configuration item in response to the fourth operation; and display a first home screen after the playing of the first home screen animation is completed, where the fifth configuration item indicates a total quantity of frames of the first home screen animation, the first home screen animation is a second video interval from a third frame to a fourth frame in the first video file, the third frame is a next frame of the second frame, a quantity of frames of the second video interval is the total quantity of frames of the first home screen animation, and a background image of the first home screen is the fourth frame.

In some embodiments, the receiving module 1101 is further configured to receive, in the full-screen AOD mode, a fifth operation inputted by the user, where the fifth operation is used for unlocking the screen of the electronic device.

The processing module 1103 is further configured to: enter, by the electronic device, a screen-on and unlocked state in response to the fifth operation, play the first video file according to a fourth configuration item and a fifth configuration item, and display a first home screen after the playing of the first video file is completed, where the fourth configuration item and the fifth configuration item are configuration items in the first configuration file, the first video file includes a first lock screen animation and a first home screen animation, the fourth configuration item indicates a total quantity of frames of the first lock screen animation, the fourth configuration item indicates the total quantity of frames of the first lock screen animation, the first lock screen animation is a first video interval from a first frame to a second frame in the first video file, the first frame is the 1^{st} frame of the first video file, a quantity of frames of the first video interval is the total quantity of frames of the first lock screen animation, the fifth configuration item indicates a total quantity of frames of the first home screen animation, the first home screen animation is a second video interval from a third frame to a fourth frame in the first video file, the third frame is a next frame of the second frame, a quantity of frames of the second video interval is the total quantity of frames of the first home screen animation, and a background image of the first home screen is the fourth frame.

In some embodiments, the receiving module 1101 is further configured to receive a sixth operation inputted by the user, where the sixth operation is an AOD state switching operation.

The processing module 1103 is further configured to switch from the full-screen AOD mode to a local AOD mode in response to the sixth operation.

The receiving module 1101 is further configured to receive a seventh operation performed by the user in a screen-on and unlocked state, where the seventh operation is a screen-off operation.

The processing module 1103 is further configured to: play a second screen-off animation in response to the seventh operation; and enter the local AOD mode after the playing of the second screen-off animation is completed, where the second screen-off animation is a resource in the first resource package, and a last frame of the second screen-off animation is associated with an always-on image displayed in the local AOD mode, where a proportion of first pixels in all the pixels on the screen of the electronic device is less than a second preset proportion in the local AOD mode, and the second preset proportion is less than the first preset proportion.

In some embodiments, the processing module 1103 is specifically configured to: obtain a second video file, where the second video file is a video file in the first resource package, and the second video file corresponds to the local AOD mode and a current color mode; determine a first to-be-played interval from the second video file according to a sixth configuration item, a seventh configuration item, an eighth configuration item, a ninth configuration item, a tenth configuration item, and an eleventh configuration item, where a sorting order of a plurality of video frames in the first to-be-played interval is the same as a sorting order of the plurality of video frames in the second video file, the first to-be-played interval includes a target local lock screen animation and a second home screen animation, the sixth configuration item indicates a quantity of a plurality of segments of local lock screen animations in the second video file, the plurality of segments of local lock screen animations correspond to a plurality of display locations of the always-on image in the local AOD mode, the seventh configuration item indicates the target local lock screen animation corresponding to the second screen-off animation, the target local lock screen animation is one of the plurality of segments of local lock screen animations, the eighth configuration item indicates a total quantity of frames of the plurality of segments of local lock screen animations, the ninth configuration item indicates a total quantity of frames of a first segment of local lock screen animation in the plurality of segments of local lock screen animations, the tenth configuration item indicates a total quantity of frames of a second segment of local lock screen animation in the plurality of segments of local lock screen animations, the eleventh configuration item indicates a total quantity of frames of the second home screen animation in the second video file, and the sixth configuration item, the seventh configuration item, the eighth configuration item, the ninth configuration item, the tenth configuration item, and the eleventh configuration item are configuration items in the first configuration file, where the first segment of local lock screen animation is a third video interval from a fifth frame to a sixth frame in the second video file, the fifth frame is the 1^{st} frame of the second video file, and a quantity of frames of the third video interval is the total quantity of frames of the first segment of local lock screen animation; the second segment of local lock screen animation is a fourth video interval from a seventh frame to an eighth frame in the second video file, the seventh frame is a next frame of the sixth frame, and a quantity of frames of the fourth video interval is the total quantity of frames of the second segment of local lock screen animation; the plurality of segments of local lock screen animations are a fifth video interval from the fifth frame to a ninth frame in the second video file, the fifth video interval includes the third video interval and the fourth video interval, and a quantity of frames of the fifth video interval is the total quantity of frames of the plurality of segments of local lock screen animations; and the second home screen animation is a sixth video interval from a tenth frame to an eleventh frame in the second video file, the tenth frame is a next frame of the ninth frame, and a quantity of frames of the sixth video interval is the total quantity of frames of the second home screen animation; and play the second screen-off animation according to a third configuration item in response to a current configuration value of a second configuration item being supporting playing of the screen-off animation, where the third configuration item indicates whether frame extraction is supported when the second screen-off animation is played.

The processing module 1103 is further configured to: perform frame extraction on the first to-be-played interval according to a preset frame extraction multiple when a current configuration value of the third configuration item is supporting the frame extraction when the second screen-off animation is played, to obtain a second frame extraction sequence; and play the second frame extraction sequence in reverse, to play the second screen-off animation; or play the first to-be-played interval frame by frame in reverse in response to a current configuration value of the third configuration item being not supporting the frame extraction when the screen-off animation is played, to play the second screen-off animation, where a last frame of the second screen-off animation is associated with the always-on image displayed in the local AOD mode.

In some embodiments, the receiving module 1101 is further configured to receive, in the local AOD mode, an eighth operation inputted by the user, where the eighth operation is used for waking up the screen of the electronic device.

The processing module 1103 is further configured to: enter, by the electronic device, a screen-on state in response to the eighth operation, play a second lock screen animation according to the ninth configuration item, the tenth configuration item, the eleventh configuration item, and a current display location of the always-on image in the local AOD mode, and enter a second screen-on and locked state after the playing of the second lock screen animation is completed; and display a second lock screen in the second screen-on and locked state, where the second lock screen animation is one of the plurality of segments of local lock screen animations, the 1^{st} frame in the second lock screen animation is associated with the current display location, and a background image of the second lock screen is a last frame of the second lock screen animation.

In some embodiments, the receiving module 1101 is further configured to receive, in the second screen-on and locked state, an eighth operation inputted by the user, where the eighth operation is used for unlocking the screen of the electronic device.

The processing module 1103 is further configured to: play the second home screen animation according to the eighth configuration item and the eleventh configuration item in response to the eighth operation; and display a second home screen after the playing of the second home screen animation is completed, where a background image of the second home screen is the eleventh frame.

In some embodiments, the receiving module 1101 is further configured to receive, in the local AOD mode, a ninth operation inputted by the user, where the ninth operation is used for unlocking the screen of the electronic device.

The processing module 1103 is further configured to: enter, by the electronic device, a screen-on state in response to the ninth operation, sequentially play a second lock screen animation and a second home screen animation according to a ninth configuration item, a tenth configuration item, an eleventh configuration item, and a current display location of the always-on image in the local AOD mode, and display a second home screen after the playing of the second home screen animation is completed, where the second lock screen animation is one of a plurality of segments of local lock screen animations in a second video file, the second video file is a resource in the first resource package, the plurality of segments of local lock screen animations correspond to a plurality of display locations of the always-on image in the local AOD mode, the 1^{st} frame in the second lock screen animation is associated with the current display location, the ninth configuration item indicates a total quantity of frames of a first segment of local lock screen animation in the plurality of segments of local lock screen animations, the tenth configuration item indicates a total quantity of frames of a second segment of local lock screen animation in the plurality of segments of local lock screen animations, the eleventh configuration item indicates a total quantity of frames of the second home screen animation in the second video file, the ninth configuration item, the tenth configuration item, and the eleventh configuration item are configuration items in the first configuration file, and a background image of the second home screen is a last frame of the second home screen animation.

For a specific manner of performing the always-on screen method by the apparatus 1100 and beneficial effects generated by the apparatus 1100, refer to related descriptions in the method embodiments, and details are not described herein again.

An embodiment of this application further provides an electronic device, including the foregoing processor. The electronic device provided in this embodiment may be the terminal device 100 shown in FIG. 1, and is configured to perform the foregoing always-on screen method. When an integrated unit is used, the terminal device may include a processing module, a storage module, and a communication module. The processing module may be configured to control and manage actions of the terminal device, for example, may be configured to support the terminal device to perform steps performed by a display unit, a detection unit, and a processing unit. The storage module may be configured to support the terminal device to execute stored program code, data, and the like. The communication module may be configured to support communication between the terminal device and another device.

The processing module may be a processor or a controller. The processing module may implement or execute various examples of logical blocks, modules, and circuits described with reference to content disclosed in this application. The processor may alternatively be a combination of processors implementing a computing function, for example, a combination of one or more microprocessors or a combination of a digital signal processor (digital signal processor, DSP) and a microprocessor. The storage module may be a memory. The communication module may be specifically a device, for example, a radio frequency circuit, a Bluetooth chip, or a Wi-Fi chip, that interacts with another terminal device.

In an embodiment, when the processing module is a processor and the storage module is a memory, the terminal device in this embodiment may be a device having the structure shown in FIG. 1.

An embodiment of this application further provides a computer-readable storage medium. The computer-readable storage medium stores a computer program, and the computer program, when executed by a processor, causes the processor to perform the always-on screen method in any one of the foregoing embodiments.

An embodiment of this application further provides a computer program product. When the computer program product runs on a computer, the computer is caused to perform the foregoing related steps, to implement the always-on screen method in the foregoing embodiments.

The electronic device, the computer-readable storage medium, the computer program product, or the chip provided in the embodiments are all configured to perform the corresponding methods provided above. Therefore, for beneficial effects that can be achieved, refer to the beneficial effects of the corresponding methods provided above. Details are not described herein again.

In the several embodiments provided in this application, it should be understood that the disclosed apparatus and method may be implemented in other manners. For example, the foregoing apparatus embodiments are only examples. For example, the division into modules or units is only logical function division, and may be another division manner during actual implementation. For example, a plurality of units or components may be combined or integrated into another apparatus, or some features may be ignored or not performed. Moreover, mutual couplings or direct couplings or communication connections shown or discussed may be indirect couplings or communication connections through some interfaces, apparatuses or units. The changed units may or may not be physically separated. A part displayed as a unit may be one physical unit or a plurality of physical units, that is, may be located at one position or may be distributed at different positions. Some or all of the units may be selected according to actual needs to achieve the objectives of the solutions of the embodiments.

In addition, the functional units in the embodiments of this application may be integrated into one processing unit, each of the units may be physically separated, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in the embodiments of this application essentially, the part contributing to the conventional art, or all or some of the technical solutions may be implemented in a form of a software product. The software product is stored in a storage medium and includes several instructions for indicating a device (which may be a single-chip microcomputer, a chip, or the like) or a processor (processor) to perform all or some of the steps of the methods in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, and is not intended to limit the protection scope of this application. Any changes or substitutions that can be easily made by a person skilled in the art within the scope of the technology disclosed in this application should fall within the protection scope of this application. Therefore, the protection scope of this application shall be subject to the protection scope of the claims.

## Claims

1. An always-on screen display method, wherein the method is applied to an electronic device, and comprises:
receiving a first operation inputted by a user on a theme selection interface, wherein the first operation is used for selecting a first theme;
selecting the first theme in response to the first operation, wherein the first theme corresponds to a first configuration file and a first resource package, the first configuration file comprises at least a first configuration item, and the first configuration item indicates whether the first theme supports a full-screen AOD mode;
receiving a second operation performed by the user in an unlocked state, wherein the second operation is a screen-off operation;
playing a first screen-off animation in response to the second operation; and
after the playing of the first screen-off animation is completed, entering the full-screen AOD mode in response to a current configuration value of the first configuration item being that the first theme supports the full-screen AOD mode, wherein the first screen-off animation is a resource in the first resource package, and a last frame of the first screen-off animation is associated with an always-on image displayed in the full-screen AOD mode, wherein
a proportion of first pixels in all pixels on a screen of the electronic device exceeds a first preset proportion in the full-screen AOD mode, and the first pixels are lighted pixels on the screen.

2. The method according to claim 1, wherein the playing a first screen-off animation comprises:
obtaining a first video file, wherein the first video file is a resource in the first resource package, and the first video file corresponds to the full-screen AOD mode and a current color mode of a current system;
playing the first screen-off animation according to a third configuration item in response to a current configuration value of a second configuration item being supporting playing of the screen-off animation, wherein the second configuration item and the third configuration item are configuration items in the first configuration file, the second configuration item indicates whether the playing of the screen-off animation is supported, and the third configuration item indicates whether frame extraction is supported when the screen-off animation is played; and
performing frame extraction on the first video file according to a preset frame extraction multiple when a current configuration value of the third configuration item is supporting frame extraction when the first screen-off animation is played, to obtain a first frame extraction sequence, wherein a sorting order of a plurality of video frames in the first frame extraction sequence is the same as a sorting order of the plurality of video frames in the first video file; and
playing the first frame extraction sequence in reverse, to play the first screen-off animation;
or
playing video frames in the first video file frame by frame in reverse when a current configuration value of the third configuration item is not supporting frame extraction when the screen-off animation is played, to play the first screen-off animation.

3. The method according to claim 2, wherein the method further comprises:
receiving, in the full-screen AOD mode, a third operation inputted by the user, wherein the third operation is used for waking up the screen of the electronic device;
entering, by the electronic device, a screen-on state in response to the first operation, and playing a first lock screen animation according to a fourth configuration item, wherein the fourth configuration item indicates a total quantity of frames of the first lock screen animation, the first lock screen animation is a first video interval from a first frame to a second frame in the first video file, the first frame is the 1^{st} frame of the first video file, and a quantity of frames of the first video interval is the total quantity of frames of the first lock screen animation;
entering a first screen-on and locked state after the playing of the first lock screen animation is completed; and
displaying a first lock screen in the first screen-on and locked state, wherein a background image of the first lock screen is a last frame of the first lock screen animation.

4. The method according to claim 3, wherein when the first theme supports a depth-of-field effect, and after the selecting the first theme in response to the first operation, the method comprises:
obtaining a first lock screen image from the first resource package, wherein the first lock screen image is a resource in the first resource package, and the first lock screen image and the second frame comprise same display content; and
the step of displaying a first lock screen in the first screen-on and locked state comprises:
displaying the first lock screen in the first screen-on and locked state; and
displaying the first lock screen image above a layer of the first lock screen.

5. The method according to claim 3, wherein the method further comprises:
receiving, in the first screen-on and locked state, a fourth operation inputted by the user, wherein the fourth operation is used for unlocking the screen of the electronic device;
playing a first home screen animation according to the fourth configuration item and a fifth configuration item in response to the fourth operation, wherein the fifth configuration item indicates a total quantity of frames of the first home screen animation, the first home screen animation is a second video interval from a third frame to a fourth frame in the first video file, the third frame is a next frame of the second frame, and a quantity of frames of the second video interval is the total quantity of frames of the first home screen animation; and
displaying a first home screen after the playing of the first home screen animation is completed, wherein a background image of the first home screen is the fourth frame.

6. The method according to claim 2, wherein the method further comprises:
receiving, in the full-screen AOD mode, a fifth operation inputted by the user, wherein the fifth operation is used for unlocking the screen of the electronic device;
entering, by the electronic device, a screen-on and unlocked state in response to the fifth operation, and playing the first video file according to a fourth configuration item and a fifth configuration item, wherein the fourth configuration item and the fifth configuration item are configuration items in the first configuration file, the first video file comprises a first lock screen animation and a first home screen animation, the fourth configuration item indicates a total quantity of frames of the first lock screen animation, the fourth configuration item indicates the total quantity of frames of the first lock screen animation, the first lock screen animation is a first video interval from a first frame to a second frame in the first video file, the first frame is the 1^{st} frame of the first video file, a quantity of frames of the first video interval is the total quantity of frames of the first lock screen animation, the fifth configuration item indicates a total quantity of frames of the first home screen animation, the first home screen animation is a second video interval from a third frame to a fourth frame in the first video file, the third frame is a next frame of the second frame, and a quantity of frames of the second video interval is the total quantity of frames of the first home screen animation; and
displaying a first home screen after the playing of the first video file is completed, wherein a background image of the first home screen is the fourth frame.

7. The method according to claim 1, wherein the method further comprises:
receiving a sixth operation inputted by the user, wherein the sixth operation is an AOD state switching operation;
switching from the full-screen AOD mode to a local AOD mode in response to the sixth operation;
receiving a seventh operation performed by the user in a screen-on and unlocked state, wherein the seventh operation is a screen-off operation;
playing a second screen-off animation in response to the seventh operation; and
entering the local AOD mode after the playing of the second screen-off animation is completed, wherein the second screen-off animation is a resource in the first resource package, and a last frame of the second screen-off animation is associated with an always-on image displayed in the local AOD mode, wherein
a proportion of first pixels in all the pixels on the screen of the electronic device is less than a second preset proportion in the local AOD mode, and the second preset proportion is less than the first preset proportion.

8. The method according to claim 7, wherein the playing a second screen-off animation comprises:
obtaining a second video file, wherein the second video file is a video file in the first resource package, and the second video file corresponds to the local AOD mode and a current color mode of a current system;
determining a first to-be-played interval from the second video file according to a sixth configuration item, a seventh configuration item, an eighth configuration item, a ninth configuration item, a tenth configuration item, and an eleventh configuration item, wherein a sorting order of a plurality of video frames in the first to-be-played interval is the same as a sorting order of the plurality of video frames in the second video file, the first to-be-played interval comprises a target local lock screen animation and a second home screen animation, the sixth configuration item indicates a quantity of a plurality of segments of local lock screen animations in the second video file, the plurality of segments of local lock screen animations correspond to a plurality of display locations of the always-on image in the local AOD mode, the seventh configuration item indicates the target local lock screen animation corresponding to the second screen-off animation, the target local lock screen animation is one of the plurality of segments of local lock screen animations, the eighth configuration item indicates a total quantity of frames of the plurality of segments of local lock screen animations, the ninth configuration item indicates a total quantity of frames of a first segment of local lock screen animation in the plurality of segments of local lock screen animations, the tenth configuration item indicates a total quantity of frames of a second segment of local lock screen animation in the plurality of segments of local lock screen animations, the eleventh configuration item indicates a total quantity of frames of the second home screen animation in the second video file, and the sixth configuration item, the seventh configuration item, the eighth configuration item, the ninth configuration item, the tenth configuration item, and the eleventh configuration item are configuration items in the first configuration file, wherein
the first segment of local lock screen animation is a third video interval from a fifth frame to a sixth frame in the second video file, the fifth frame is the 1^{st} frame of the second video file, and a quantity of frames of the third video interval is the total quantity of frames of the first segment of local lock screen animation;
the second segment of local lock screen animation is a fourth video interval from a seventh frame to an eighth frame in the second video file, the seventh frame is a next frame of the sixth frame, and a quantity of frames of the fourth video interval is the total quantity of frames of the second segment of local lock screen animation;
the plurality of segments of local lock screen animations are a fifth video interval from the fifth frame to a ninth frame in the second video file, the fifth video interval comprises the third video interval and the fourth video interval, and a quantity of frames of the fifth video interval is the total quantity of frames of the plurality of segments of local lock screen animations; and
the second home screen animation is a sixth video interval from a tenth frame to an eleventh frame in the second video file, the tenth frame is a next frame of the ninth frame, and a quantity of frames of the sixth video interval is the total quantity of frames of the second home screen animation;
playing the second screen-off animation according to a third configuration item in response to a current configuration value of a second configuration item being supporting the playing of the screen-off animation, wherein the third configuration item indicates whether frame extraction is supported when the second screen-off animation is played; and
performing frame extraction on the first to-be-played interval according to a preset frame extraction multiple when a current configuration value of the third configuration item is supporting the frame extraction when the second screen-off animation is played, to obtain a second frame extraction sequence; and
playing the second frame extraction sequence in reverse, to play the second screen-off animation;
or
playing the first to-be-played interval frame by frame in reverse in response to a current configuration value of the third configuration item being not supporting the frame extraction when the screen-off animation is played, to play the second screen-off animation, wherein a last frame of the second screen-off animation is associated with the always-on image displayed in the local AOD mode.

9. The method according to claim 8, wherein the method further comprises:
receiving, in the local AOD mode, an eighth operation inputted by the user, wherein the eighth operation is used for waking up the screen of the electronic device;
entering, by the electronic device, a screen-on state in response to the eighth operation, and playing a second lock screen animation according to the ninth configuration item, the tenth configuration item, the eleventh configuration item, and a current display location of the always-on image in the local AOD mode, wherein the second lock screen animation is one of the plurality of segments of local lock screen animations, and the 1^{st} frame in the second lock screen animation is associated with the current display location;
entering a second screen-on and locked state after the playing of the second lock screen animation is completed; and
displaying a second lock screen in the second screen-on and locked state, wherein a background image of the second lock screen is a last frame of the second lock screen animation.

10. The method according to claim 9, wherein the method further comprises:
receiving, in the second screen-on and locked state, an eighth operation inputted by the user, wherein the eighth operation is used for unlocking the screen of the electronic device;
playing the second home screen animation according to the eighth configuration item and the eleventh configuration item in response to the eighth operation; and
displaying a second home screen after the playing of the second home screen animation is completed, wherein a background image of the second home screen is the eleventh frame.

11. The method according to claim 7, wherein the method further comprises:
receiving, in the local AOD mode, a ninth operation inputted by the user, wherein the ninth operation is used for unlocking the screen of the electronic device;
entering, by the electronic device, a screen-on state in response to the ninth operation, and sequentially playing a second lock screen animation and a second home screen animation according to a ninth configuration item, a tenth configuration item, an eleventh configuration item, and a current display location of the always-on image in the local AOD mode, wherein the second lock screen animation is one of a plurality of segments of local lock screen animations in a second video file, the second video file is a resource in the first resource package, the plurality of segments of local lock screen animations correspond to a plurality of display locations of the always-on image in the local AOD mode, the 1^{st} frame in the second lock screen animation is associated with the current display location, the ninth configuration item indicates a total quantity of frames of a first segment of local lock screen animation in the plurality of segments of local lock screen animations, the tenth configuration item indicates a total quantity of frames of a second segment of local lock screen animation in the plurality of segments of local lock screen animations, the eleventh configuration item indicates a total quantity of frames of the second home screen animation in the second video file, and the ninth configuration item, the tenth configuration item, and the eleventh configuration item are configuration items in the first configuration file; and
displaying a second home screen after the playing of the second home screen animation is completed, wherein a background image of the second home screen is a last frame of the second home screen animation.

12. An electronic device, comprising a processor, a memory, and an interface, wherein
the processor, the memory, and the interface cooperate with each other to cause the electronic device to perform the method according to any one of claims 1 to 11.

13. A computer-readable storage medium, wherein the computer-readable storage medium stores a computer program, and the computer program, when executed by a processor, causes the processor to perform the method according to any one of claims 1 to 11.
